# EUROPEAN PATENT APPLICATION

(11) **EP 4 621 544 A1**
(43) Date of publication of application: **24.09.2025**
(21) Application number: 23909337.0
(22) Date of filing: 12.09.2023
(51) Int. Cl.: G06F 3/04883

(54) **METHOD FOR ENABLING WHITEBOARD DRAWING, AND RELATED APPARATUS**

(30) Priority: 26.12.2022 CN 202211678157; 07.03.2023 CN 202310247972
(71) Applicant: Huawei Technologies Co., Ltd., Shenzhen, Guangdong 518129 (CN)
(72) Inventor: LIU, Tianfu, Shenzhen, Guangdong 518129 (CN); LI, Xiaohua, Shenzhen, Guangdong 518129 (CN)
(74) Representative: Gill Jennings & Every LLP
(86) International application number: PCT/CN2023/118209
(87) International publication number: WO 2024/139400

(57) **Abstract**

A method for enabling whiteboard drawing is applied to an online conference to implement whiteboard sharing. In the method, when a user joins a conference by using a first electronic device, the user may send a request to a second electronic device by using the first electronic device, so that the second electronic device shares, based on the request, a picture of a whiteboard on the second electronic device in the conference joined by the first electronic device. In this way, when the user joins a conference by using an electronic device, the user can draw whiteboard content based on another electronic device having a stronger whiteboard drawing capability. This reduces difficulty in drawing content on the whiteboard by the user and helps the user accurately draw content that the user expects to create.

## Description

This application claims priority to Chinese Patent Application No. 202211678157.0, filed with the China National Intellectual Property Administration on December 26, 2022 and entitled "COLLABORATION SYSTEM", and to Chinese Patent Application No. 202310247972.X, filed with the China National Intellectual Property Administration on March 7, 2023, and entitled "METHOD FOR ENABLING WHITEBOARD DRAWING AND RELATED APPARATUS", both of which are incorporated herein by reference in their entireties.

### TECHNICAL FIELD

This application relates to the field of computer technologies, and in particular, to a method for enabling whiteboard drawing and a related apparatus.

### BACKGROUND

With development of network technologies and popularization of mobile terminals, more users participate in online conferences to meet requirements in work scenarios. Specifically, users in different places may join an online conference by using mobile terminals, so that the users in different places can join a same work conference together.

In an online conference scenario, some users may need to use a whiteboard drawing function to display created content for work purposes. Specifically, after a user enables a whiteboard drawing function on a mobile terminal, the mobile terminal displays a whiteboard (that is, a white blank area), the user may freely draw content on the whiteboard by using an external device such as a mouse or a stylus, and the content drawn by the user on the whiteboard is shared with a terminal of another user in a same conference, so that the users can freely share content created in real time.

However, when a user joins a conference by using a mobile terminal such as a smartphone, a notebook computer, or a tablet computer, due to limited hardware performance of the mobile terminal that joins the conference, it is difficult for the user to draw content on a whiteboard of the mobile terminal. As a result, it is usually difficult for the user to accurately draw content that the user expects to create. For example, when a user joins a conference by using a notebook computer, because the notebook computer used by the user does not have a touchscreen function and a display screen of the notebook computer is relatively small, the user can only draw content on a whiteboard with a relatively small display area by operating a mouse., which causes great inconvenience in a whiteboard drawing process and increases difficulty in drawing content by the user.

### SUMMARY

Embodiments of this application provide a method for enabling whiteboard drawing, to reduce difficulty in drawing content on a whiteboard by a user and help the user accurately draw content that the user expects to create.

A first aspect of this application provides a method for enabling whiteboard drawing. The method is applied to a first electronic device joining a first conference. The method includes the following steps: The first electronic device sends a first request message to a second electronic device, where the first request message is used to request the second electronic device to share a whiteboard on the second electronic device in the first conference, and the first conference is a conference joined by the first electronic device. Sharing the whiteboard on the second electronic device may specifically refer to sharing a picture of the whiteboard on the second electronic device.

The first electronic device may be, for example, a mobile terminal such as a smartphone, a notebook computer, a tablet computer, or a personal computer. The second electronic device may be, for example, a conference device such as a conference tablet, a smart television, or an electronic whiteboard. Generally, the second electronic device may be a large-screen device capable of handwriting on the whiteboard (that is, capable of performing whiteboard drawing on a screen by using a stylus), and a display screen of the second electronic device is usually larger than a display screen of the first electronic device, so that a higher whiteboard drawing capability is provided (that is, the whiteboard drawing capability of the second electronic device is higher than that of the first electronic device).

Then the first electronic device receives a first response message sent by the second electronic device, where the first response message indicates that the second electronic device successfully shares the whiteboard on the second electronic device in the first conference.

In this solution, when a user joins the conference by using the first electronic device, the user may send a request to the second electronic device by using the first electronic device, so that the second electronic device shares, based on the request, the picture of the whiteboard on the second electronic device in the conference joined by the first electronic device. In this way, when the user joins a conference by using an electronic device, the user can draw whiteboard content based on another electronic device having a stronger whiteboard drawing capability. This reduces difficulty in drawing content on the whiteboard by the user and helps the user accurately draw content that the user expects to create.

In a possible implementation, the method further includes: the first electronic device receives first data sent by the second electronic device, where the first data is obtained based on the picture of the whiteboard on the second electronic device; and the first electronic device sends the first data to a conferencing server, where the conferencing server is connected to an electronic device joining the first conference.

In this solution, the first electronic device receives whiteboard data from the second electronic device, and forwards the whiteboard data to the conferencing server, so that the picture of the whiteboard on the second electronic device can be shared with an electronic device joining the first conference, and the second electronic device does not need to join the first conference, thereby reducing difficulty in drawing content on the whiteboard by the user and ensuring that the user can chair the conference based on the commonly used first electronic device with portability.

In a possible implementation, the first data includes an image, and the image is obtained based on the picture of the whiteboard; or the first data includes a first drawing instruction, and the first drawing instruction indicates a drawing process of the picture of the whiteboard.

In this solution, the image of the whiteboard picture or a drawing instruction is carried in data transmitted between electronic devices, so that another electronic device joining the first conference can restore, based on the received data, the picture of the whiteboard shared on the second electronic device, thereby improving feasibility of the solution.

In a possible implementation, the first data is used to display the picture of the whiteboard on a third electronic device joining the first conference; and the method further includes:
the first electronic device receives second data sent by the conferencing server, where the second data includes a second drawing instruction, and the second drawing instruction indicates a drawing process performed by the third electronic device on the picture of the whiteboard; and then the first electronic device sends the second data to the second electronic device.

In this solution, when the first electronic device forwards the whiteboard data from the second electronic device to the conferencing server, the first electronic device may further forward whiteboard data from another electronic device to the second electronic device, to implement whiteboard collaboration between electronic devices, ensure that the solution can meet requirements in a plurality of scenarios, and improve adaptability of the solution to the scenarios.

In a possible implementation, after the first electronic device receives the first data, the first electronic device may display the picture of the whiteboard based on the first data.

In this solution, in addition to forwarding the whiteboard data to another electronic device joining the first conference, the first electronic device may further display the picture of the whiteboard on the first electronic device based on the received whiteboard data, to meet a requirement of the user for displaying the picture of the whiteboard, and ensure that the user of the first electronic device can also view the picture of the shared whiteboard on an interface of the first electronic device.

In a possible implementation, the method further includes: the first electronic device generates third data in response to a drawing operation performed by the user of the first electronic device on the picture of the whiteboard, where the third data includes a third drawing instruction, and the third drawing instruction indicates a drawing process corresponding to the drawing operation of the user; and the first electronic device sends the third data to the second electronic device and the conferencing server.

In this solution, in addition to forwarding the whiteboard data to another electronic device joining the first conference, the first electronic device may further participate in whiteboard collaboration, and collaborate with the second electronic device and another electronic device to perform drawing on the whiteboard, to ensure that the user of the first electronic device can also draw the picture of the whiteboard on the first electronic device at the same time, thereby meeting diversified requirements of the scenarios.

In a possible implementation, the first request message includes an address of a conferencing server, and the first request message is further used to request the second electronic device to exchange data indicating the picture of the whiteboard with the conferencing server, where the conferencing server is connected to an electronic device joining the first conference.

In this solution, the first electronic device includes the address of the conferencing server into the first request message sent to the second electronic device, to indicate that the second electronic device can subsequently exchange the whiteboard data through the conferencing server with another electronic device joining the first conference, and the first electronic device no longer needs to be responsible for forwarding the whiteboard data, thereby reducing processing pressure on the first electronic device.

In a possible implementation, the first electronic device may send a second request message to the conferencing server, where the second request message indicates the first electronic device to share, by using the second electronic device, the picture of the whiteboard with another electronic device joining the first conference; and then the first electronic device receives a second response message sent by the conferencing server, where the second response message includes an authentication credential.

In this way, when the first electronic device sends the first request message to the second electronic device, the first request message may further include the authentication credential, and the authentication credential is used to enable the second electronic device to be authenticated by the conferencing server.

In this solution, the first electronic device sends the authentication credential generated by the conferencing server to the second electronic device, so that the second electronic device can establish a secure connection to the conferencing server based on the authentication credential. In this way, unauthorized devices are prevented from connecting to the conferencing server and disrupting normal progress of the conference.

In a possible implementation, the first electronic device is connected to the second electronic device by using a cable, a wireless network, or a wireless screen transmitter.

In a possible implementation, the first electronic device loads the second electronic device as a virtual camera, and the first electronic device communicates with the second electronic device by using the universal serial bus video class (USB Video Class, UVC) protocol; and/or
the first electronic device loads the second electronic device as a virtual human interface device (Human Interface Device, HID), and the first electronic device communicates with the second electronic device by using the HID protocol.

Generally, the first electronic device loads the second electronic device as a virtual camera or a virtual HID, and communicates with the second electronic device by using the UVC or HID protocol, so that the second electronic device can provide a whiteboard drawing function for the conference based on the existing protocol, thereby reducing changes to the conventional technology and enhancing feasibility of the solution.

A second aspect of this application provides a method for enabling whiteboard drawing. The method includes the following steps:

A second electronic device receives a first request message sent by a first electronic device, where the first request message is used to request the second electronic device to share a whiteboard on the second electronic device in a first conference, and the first conference is a conference joined by the first electronic device;
the second electronic device displays a picture of the whiteboard, where the picture of the whiteboard is shared in the first conference; and
the second electronic device sends a first response message to the first electronic device, where the first response message indicates that the second electronic device successfully shares the whiteboard on the second electronic device in the first conference.

In a possible implementation, the method further includes: the second electronic device sends first data to the first electronic device, where the first data is obtained based on the picture of the whiteboard, and the first data is used to share the picture of the whiteboard in the first conference.

In a possible implementation, the first data includes an image, and the image is obtained based on the picture of the whiteboard; or
the first data includes a first drawing instruction, and the first drawing instruction indicates a drawing process of the picture of the whiteboard.

In a possible implementation, the method further includes:
the second electronic device receives second data sent by the first electronic device, where the second data includes a second drawing instruction, and the second drawing instruction indicates a drawing process performed on the picture of the whiteboard; and the second electronic device executes the second drawing instruction to update the picture of the whiteboard.

In a possible implementation, the first request message includes an address of a conferencing server, and the first request message is further used to request the second electronic device to exchange data indicating the picture of the whiteboard with the conferencing server, where the conferencing server is connected to an electronic device joining the first conference; and
the method further includes:
the second electronic device sends third data to the conferencing server, where the third data is obtained based on the picture of the whiteboard, and the third data is used to share the picture of the whiteboard in the first conference.

In a possible implementation, the method further includes:
the second electronic device receives fourth data sent by the conferencing server, where the fourth data includes a third drawing instruction, and the third drawing instruction indicates a drawing process performed by another electronic device joining the first conference on the picture of the whiteboard; and
the second electronic device executes the third drawing instruction to update the picture of the whiteboard.

In a possible implementation, the first request message further includes an authentication credential, and the authentication credential is used to enable the second electronic device to be authenticated by the conferencing server; and
the method further includes: the second electronic device establishes a connection to the conferencing server by using the authentication credential.

In a possible implementation, the second electronic device is connected to the first electronic device by using a cable, a wireless network, or a wireless screen transmitter.

A third aspect of this application provides an apparatus for enabling whiteboard drawing. The apparatus is deployed on a first electronic device. The apparatus includes:
a sending module, configured to send a first request message to a second electronic device, where the first request message is used to request the second electronic device to share a whiteboard on the second electronic device in a first conference, and the first conference is a conference joined by the first electronic device; and
a receiving module, configured to receive a first response message sent by the second electronic device, where the first response message indicates that the second electronic device successfully shares the whiteboard on the second electronic device in the first conference.

In a possible implementation,
the receiving module is further configured to receive first data sent by the second electronic device, where the first data is obtained based on a picture of the whiteboard; and
the sending module is further configured to send the first data to a conferencing server, where the conferencing server is connected to an electronic device joining the first conference.

In a possible implementation, the first data includes an image, and the image is obtained based on the picture of the whiteboard; or
the first data includes a first drawing instruction, and the first drawing instruction indicates a drawing process of the picture of the whiteboard.

In a possible implementation, the first data is used to display the picture of the whiteboard on a third electronic device joining the first conference;
the receiving module is further configured to receive second data sent by the conferencing server, where the second data includes a second drawing instruction, and the second drawing instruction indicates a drawing process performed by the third electronic device on the picture of the whiteboard; and
the sending module is further configured to send the second data to the second electronic device.

In a possible implementation, the apparatus further includes:
a display module, configured to display, by the first electronic device, the picture of the whiteboard based on the first data.

In a possible implementation, the apparatus further includes:
a processing module, configured to generate third data in response to a drawing operation performed by a user of the first electronic device on the picture of the whiteboard, where the third data includes a third drawing instruction, and the third drawing instruction indicates a drawing process corresponding to the drawing operation; and
the sending module is further configured to send the third data to the second electronic device and the conferencing server.

In a possible implementation, the first request message includes an address of a conferencing server, and the first request message is further used to request the second electronic device to exchange data indicating a picture of the whiteboard with the conferencing server, where the conferencing server is connected to an electronic device joining the first conference.

In a possible implementation,
the sending module is further configured to send a second request message to the conferencing server, where the second request message indicates the first electronic device to share, by using the second electronic device, the picture of the whiteboard with another electronic device joining the first conference; and
the receiving module is further configured to receive a second response message sent by the conferencing server, where the second response message includes an authentication credential, where
the first request message further includes the authentication credential, and the authentication credential is used to enable the second electronic device to be authenticated by the conferencing server.

In a possible implementation, the first electronic device is connected to the second electronic device by using a cable, a wireless network, or a wireless screen transmitter.

In a possible implementation, the first electronic device loads the second electronic device as a virtual camera, and the first electronic device communicates with the second electronic device by using the UVC protocol; and/or
the first electronic device loads the second electronic device as a virtual HID, and the first electronic device communicates with the second electronic device by using the HID protocol.

A fourth aspect of this application provides an apparatus for enabling whiteboard drawing. The apparatus is deployed on a second electronic device. The apparatus includes:
a receiving module, configured to receive a first request message sent by a first electronic device, where the first request message is used to request the second electronic device to share a whiteboard on the second electronic device in a first conference, and the first conference is a conference joined by the first electronic device;
a display module, configured to display a picture of the whiteboard, where the picture of the whiteboard is shared in the first conference; and
a sending module, configured to send a first response message to the first electronic device, where the first response message indicates that the second electronic device successfully shares the whiteboard on the second electronic device in the first conference.

In a possible implementation,
the sending module is further configured to send first data to the first electronic device, where the first data is obtained based on the picture of the whiteboard, and the first data is used to share the picture of the whiteboard in the first conference.

In a possible implementation, the first data includes an image, and the image is obtained based on the picture of the whiteboard; or
the first data includes a first drawing instruction, and the first drawing instruction indicates a drawing process of the picture of the whiteboard.

In a possible implementation,
the receiving module is further configured to receive second data sent by the first electronic device, where the second data includes a second drawing instruction, and the second drawing instruction indicates a drawing process performed on the picture of the whiteboard; and
the apparatus further includes a processing module, configured to execute the second drawing instruction to update the picture of the whiteboard.

In a possible implementation, the first request message includes an address of a conferencing server, and the first request message is further used to request the second electronic device to exchange data indicating the picture of the whiteboard with the conferencing server, where the conferencing server is connected to an electronic device joining the first conference; and
the sending module is further configured to send third data to the conferencing server, where the third data is obtained based on the picture of the whiteboard, and the third data is used to share the picture of the whiteboard in the first conference.

In a possible implementation,
the receiving module is further configured to receive fourth data sent by the conferencing server, where the fourth data includes a third drawing instruction, and the third drawing instruction indicates a drawing process performed by another electronic device joining the first conference on the picture of the whiteboard; and
the apparatus further includes a processing module, configured to execute the third drawing instruction to update the picture of the whiteboard.

In a possible implementation, the first request message further includes an authentication credential, and the authentication credential is used to enable the second electronic device to be authenticated by the conferencing server; and
the apparatus further includes a processing module, configured to establish a connection to the conferencing server by using the authentication credential.

In a possible implementation, the second electronic device is connected to the first electronic device by using a cable, a wireless network, or a wireless screen transmitter.

A fifth aspect of this application provides an electronic device, including a processor and a memory. The memory is configured to store computer instructions. When the processor executes the instructions, the electronic device is enabled to perform the method according to any one of the foregoing aspects. The electronic device may include the apparatuses in the third aspect and the fourth aspect.

A sixth aspect of this application provides a whiteboard sharing system, including the apparatus according to any implementation of the third aspect and the apparatus according to any implementation of the fourth aspect.

A seventh aspect of this application provides a computer-readable storage medium. The computer-readable storage medium stores instructions. When the instructions are run on an electronic device, the electronic device may be enabled to perform the method according to any one of the foregoing aspects.

An eighth aspect of this application provides a computer program product including instructions. When the instructions are run on an electronic device, the electronic device may be enabled to perform the method according to any one of the foregoing aspects.

A ninth aspect of this application provides a chip. The chip includes a processor and a communication interface. The communication interface is configured to communicate with a module other than the chip. The processor is configured to run a computer program or instructions, so that an apparatus in which the chip is installed can perform the method according to any one of the foregoing aspects.

For technical effects brought by any design of the second aspect to the ninth aspect, refer to the technical effects brought by different implementations of the first aspect. Details are not described herein again.

### BRIEF DESCRIPTION OF DRAWINGS

FIG. 1 is a diagram in which a user draws content on a whiteboard of a notebook computer according to an embodiment of this application;
FIG. 2 is a diagram of an architecture of an application scenario according to an embodiment of this application;
FIG. 3 is a diagram of an architecture of another application scenario according to an embodiment of this application;
FIG. 4 is a diagram of a structure of an electronic device 401 according to an embodiment of this application;
FIG. 5 is a diagram of a structure of an electronic device 500 according to an embodiment of this application;
FIG. 6A is a schematic flowchart of a method for enabling whiteboard drawing according to an embodiment of this application;
FIG. 6B is a diagram in which a second electronic device provides whiteboard sharing for a conference according to an embodiment of this application;
FIG. 7A is a schematic flowchart of another method for enabling whiteboard drawing according to an embodiment of this application;
FIG. 7B is a diagram in which a second electronic device provides whiteboard collaboration for a conference according to an embodiment of this application;
FIG. 8 is a schematic flowchart of a method for enabling whiteboard drawing according to an embodiment of this application;
FIG. 9A is a schematic flowchart in which a first electronic device connects to a second electronic device by using a cable and loads the second electronic device as a virtual camera according to an embodiment of this application;
FIG. 9B is a schematic flowchart in which a first electronic device triggers a second electronic device to exchange a whiteboard drawing picture according to an embodiment of this application;
FIG. 9C-1 and FIG. 9C-2 are a schematic flowchart in which a first electronic device exchanges a picture of a whiteboard with a second electronic device according to an embodiment of this application;

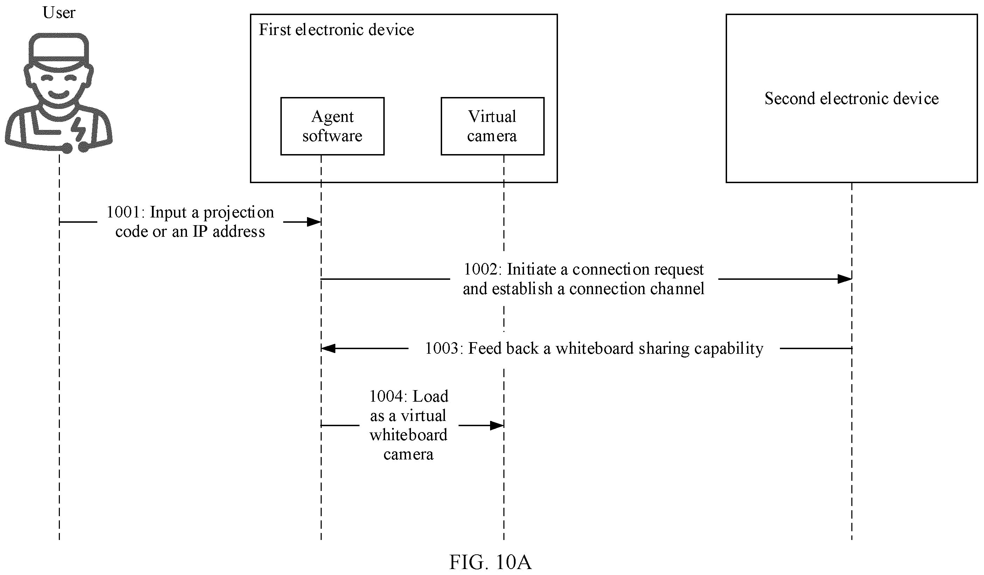

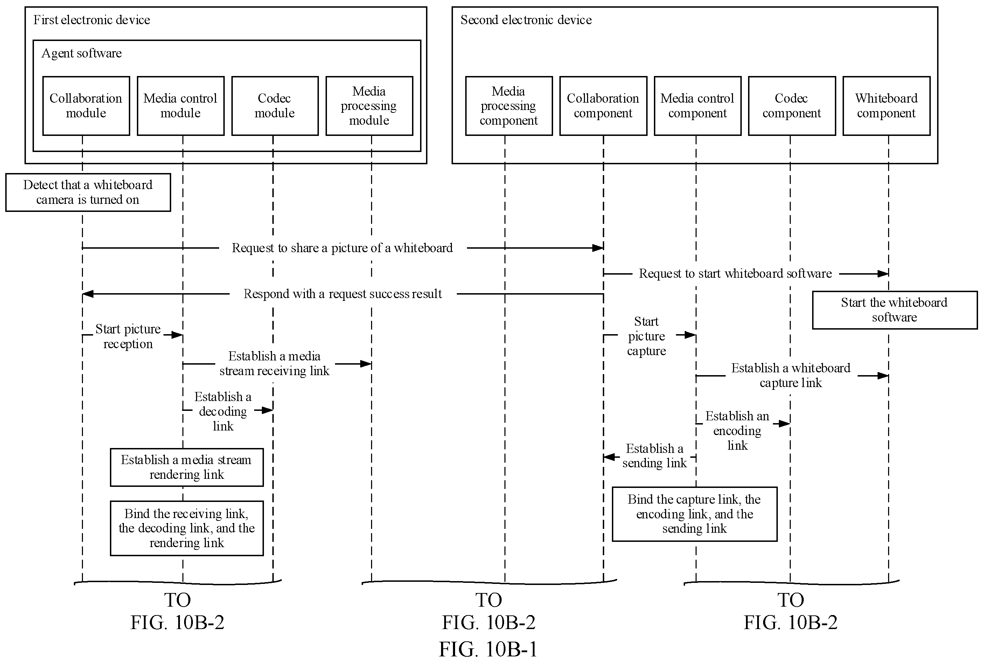

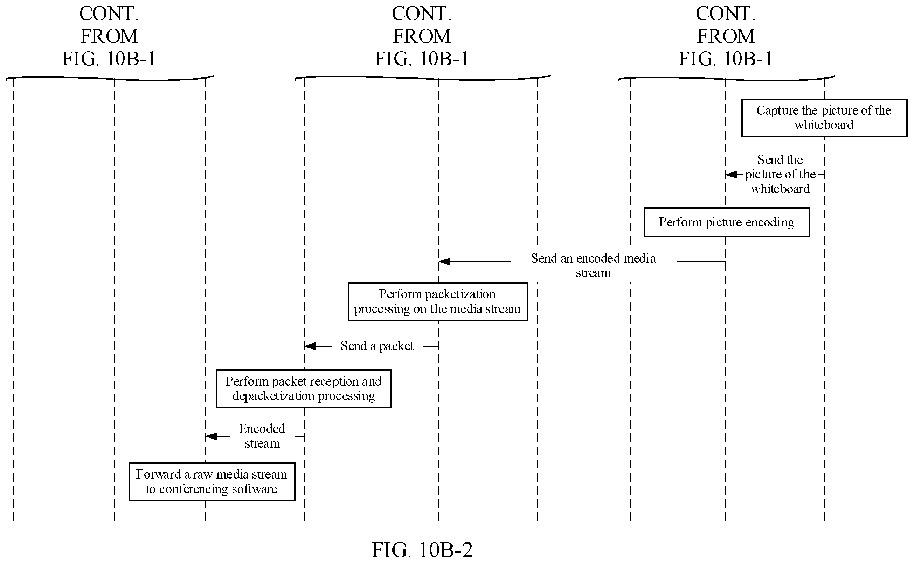

FIG. 10A is a diagram in which a first electronic device establishes a connection to a second electronic device according to an embodiment of this application;
FIG. 10B-1 and FIG. 10B-2 are a schematic flowchart in which a first electronic device exchanges a picture of a whiteboard with a second electronic device based on agent software according to an embodiment of this application;

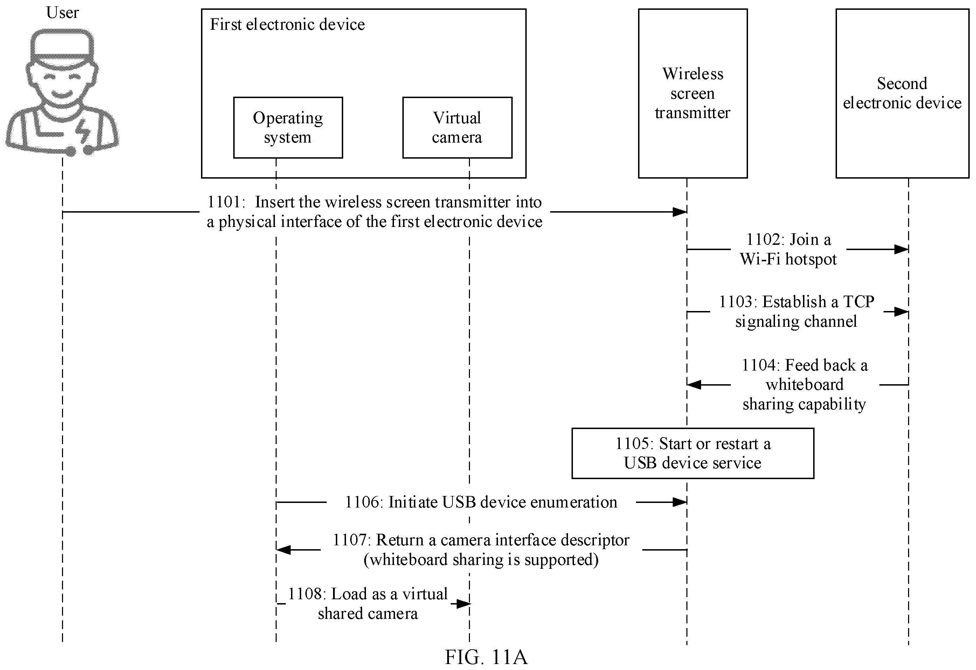

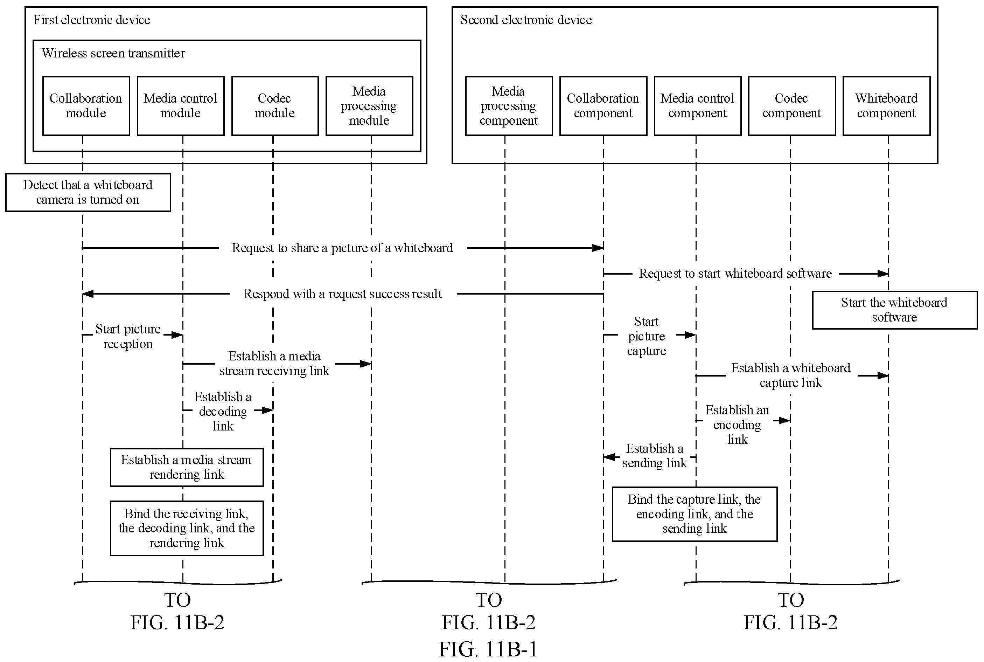

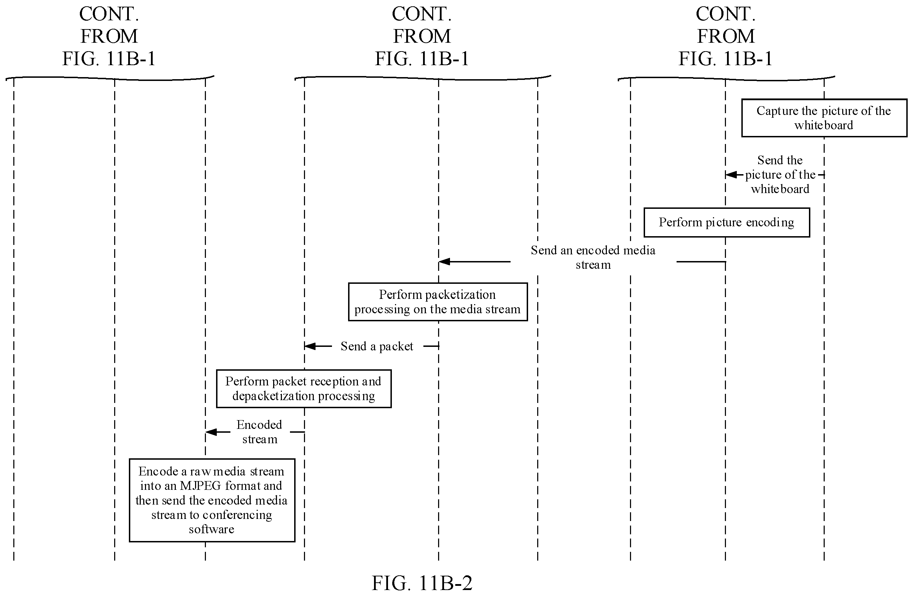

FIG. 11A is a diagram in which a first electronic device establishes a connection to a second electronic device by using a wireless screen transmitter according to an embodiment of this application;
FIG. 11B-1 and FIG. 11B-2 are a diagram in which a first electronic device exchanges a picture of a whiteboard with a second electronic device by using a wireless screen transmitter according to an embodiment of this application;

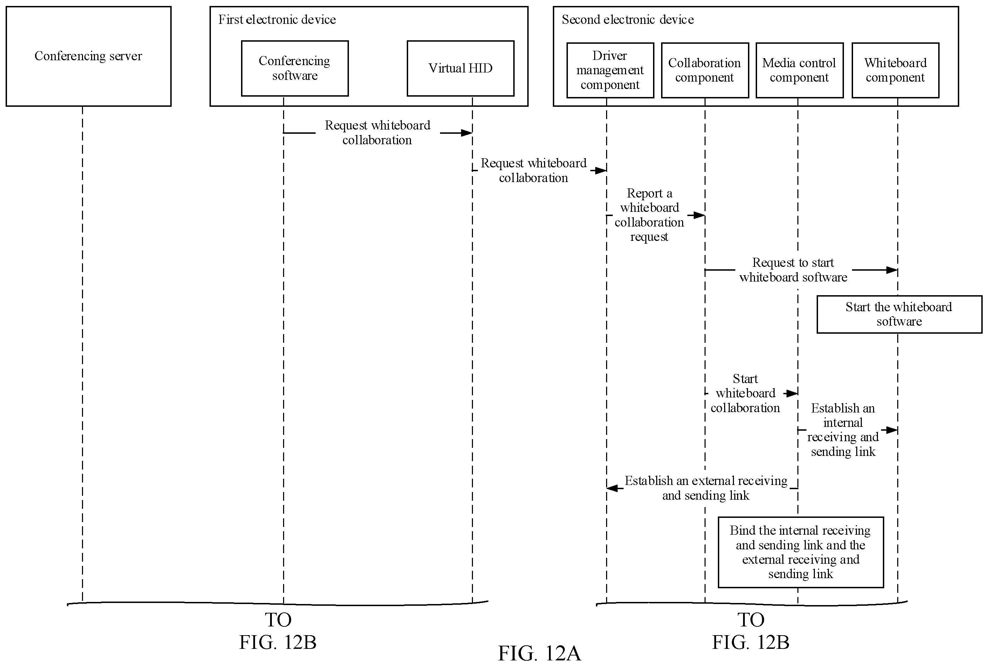

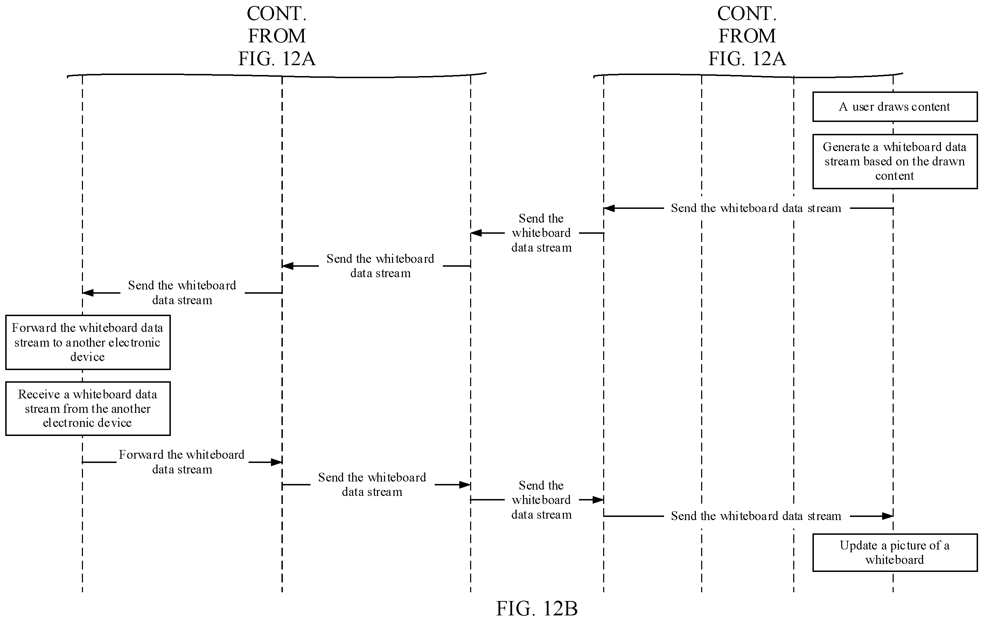

FIG. 12A and FIG. 12B are a schematic flowchart in which a first electronic device triggers a second electronic device to exchange a picture of a whiteboard according to an embodiment of this application;

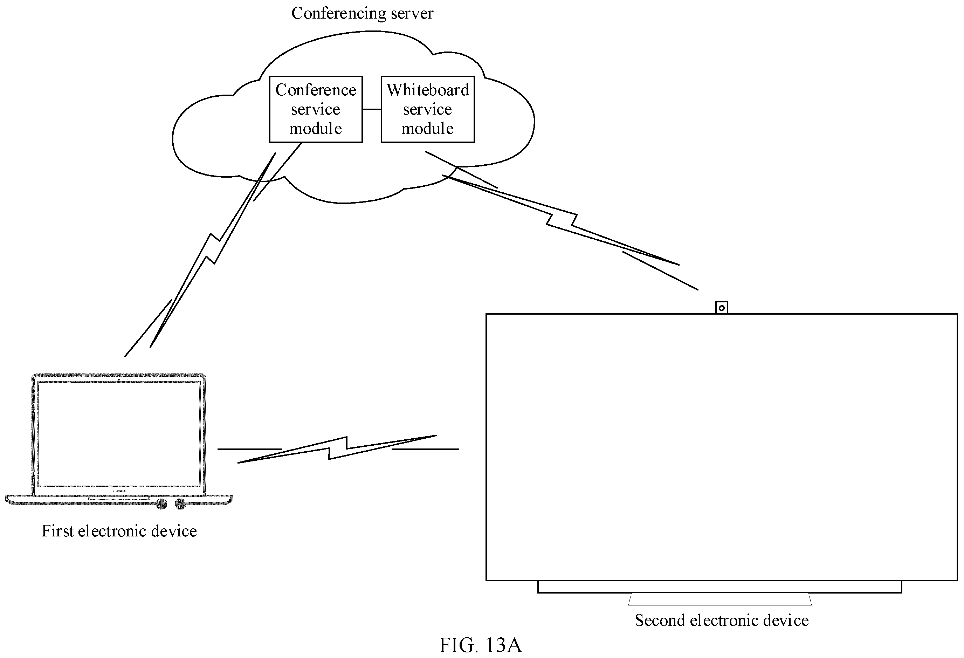

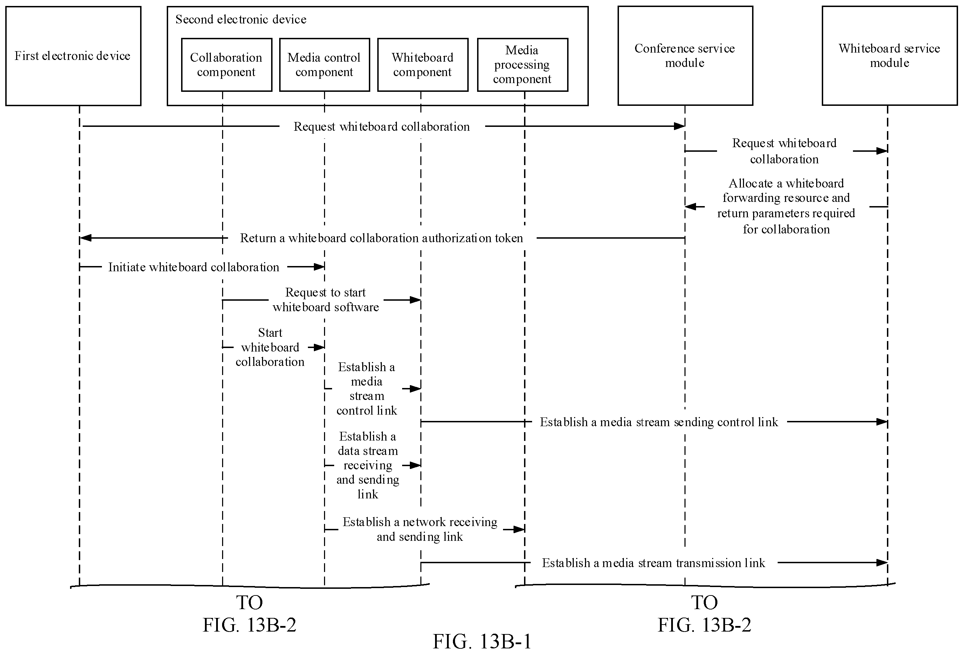

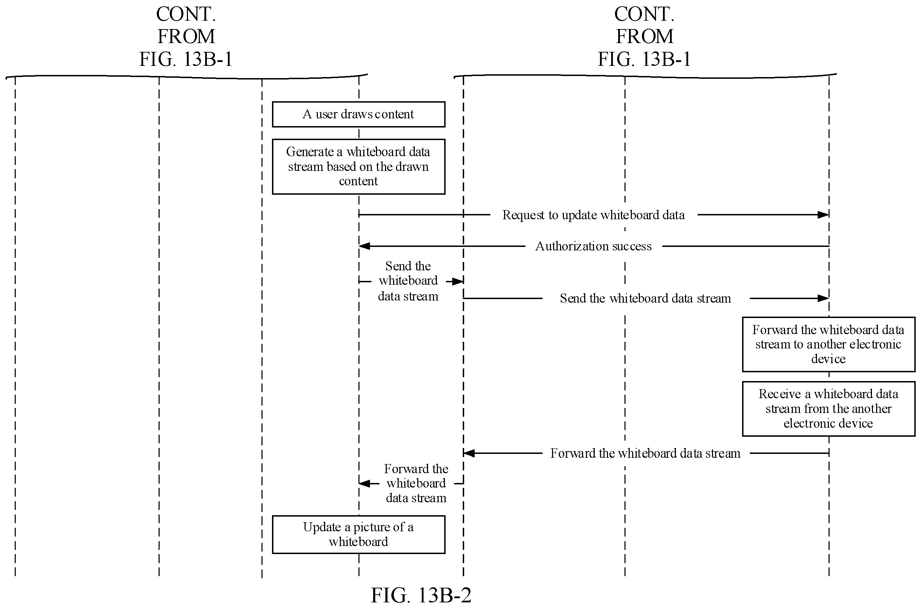

FIG. 13A is a diagram of an architecture of another application scenario according to an embodiment of this application;
FIG. 13B-1 and FIG. 13B-2 are a schematic flowchart in which a first electronic device triggers a second electronic device to exchange a whiteboard data stream with a whiteboard service module according to an embodiment of this application;

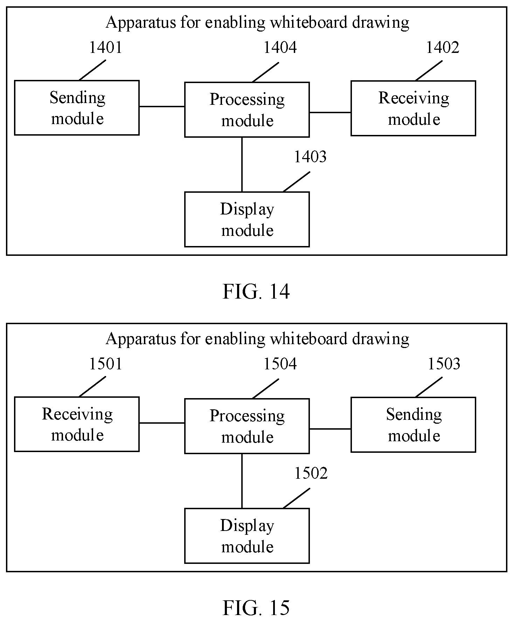

FIG. 14 is a diagram of a structure of an apparatus 1400 for enabling whiteboard drawing according to an embodiment of this application; and
FIG. 15 is a diagram of a structure of an apparatus 1500 for enabling whiteboard drawing according to an embodiment of this application.

### DESCRIPTION OF EMBODIMENTS

The following describes embodiments of this application with reference to the accompanying drawings. It is clear that the described embodiments are merely some rather than all of the embodiments of this application. A person of ordinary skill in the art may know that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in appropriate circumstances so that embodiments described herein can be implemented in other orders than the order illustrated or described herein.

In addition, the terms "include", "have", and any other variants mean to cover a non-exclusive inclusion, for example, a process, method, system, product, or device that includes a list of steps or modules is not necessarily limited to those steps or modules, but may include other steps or modules that are not expressly listed or that are inherent to the process, method, system, product, or device. Names or numbers of steps in this application do not mean that the steps in the method procedure need to be performed in a time/logical sequence indicated by the names or numbers. An execution sequence of the steps named or numbered in the procedure can be changed based on a technical objective to be achieved, provided that same or similar technical effects can be achieved.

For ease of understanding, the following describes technical terms in embodiments of this application.

### (1) Whiteboard

In the embodiments, a whiteboard refers to an electronic whiteboard shared on an electronic device, and content drawn on the whiteboard can be displayed on each terminal device by using a network. In an online conference scenario, a whiteboard is similar to a blackboard in an offline scenario. Content drawn by a user on the whiteboard can be synchronously transmitted to electronic devices of other users, so that the other users can clearly view the specific content drawn by the user on the whiteboard.

### (2) Whiteboard sharing

Whiteboard sharing means that, among a plurality of electronic devices participating in a same conference, one electronic device is responsible for drawing whiteboard content, and sharing the drawn whiteboard content with other electronic devices. The electronic devices that the whiteboard content is shared with can only view the shared whiteboard content and cannot perform drawing operations on a picture of the whiteboard. In other words, only one electronic device can perform drawing on the whiteboard.

### (3) Whiteboard collaboration

Whiteboard collaboration means that a plurality of electronic devices participating in a same conference can all draw whiteboard content, and that whiteboard content drawn by each electronic device is synchronized to other electronic devices in real time, so that the plurality of electronic devices draw the whiteboard content together. Therefore, the picture of the whiteboard displayed on each electronic device is actually obtained by superimposing the whiteboard content drawn by the plurality of electronic devices.

### (4) Serialization (serialization)

In data processing in computer science, serialization is a process of converting a data structure or an object state into a format that can be easily accessed (for example, stored in a file, kept in a buffer, or sent over a network), so that the original state can be subsequently restored in a same computer environment or another computer environment. A result of retrieving bytes based on a serialization format may be used to generate a copy with same semantics as a raw object.

### (5) Deserialization

An operation reverse to extracting a data structure from a series of bytes is referred to as deserialization (also known as unpacking, deserialization, or unmarshalling).

Currently, when a user joins a conference by using a mobile terminal such as a smartphone, a notebook computer, or a tablet computer, due to limited hardware performance of the mobile terminal that joins the conference, it is difficult for the user to draw content on a whiteboard of the mobile terminal. As a result, it is usually difficult for the user to accurately draw content that the user expects to create.

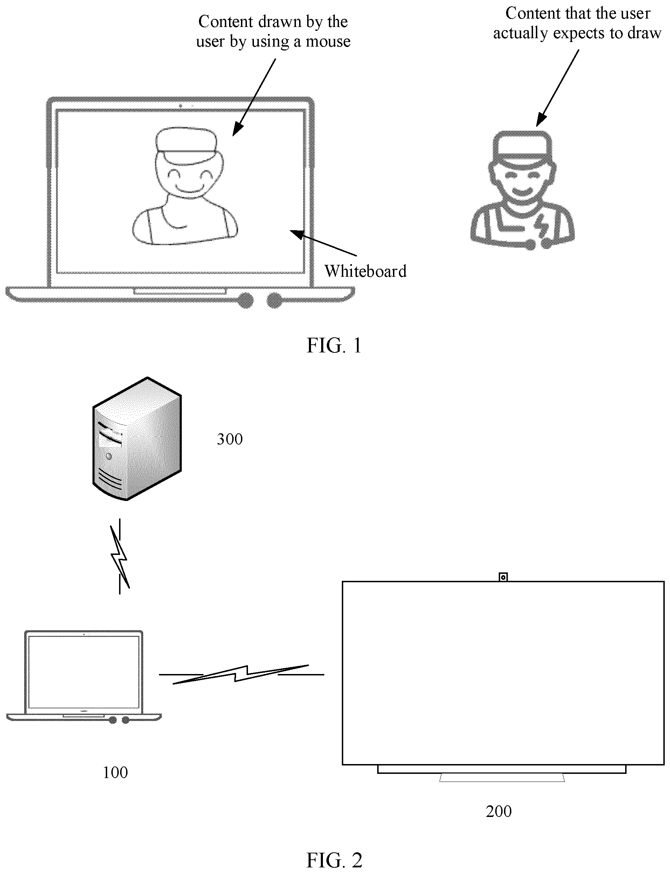

For example, FIG. 1 is a diagram in which a user draws content on a whiteboard of a notebook computer according to an embodiment of this application. As shown in FIG. 1, when the user joins a conference by using the notebook computer, because the notebook computer used by the user does not have a touchscreen function and a display screen of the notebook computer is relatively small, the user can only draw content on a whiteboard with a relatively small display area by operating a mouse. Because controllability of drawing by using the mouse is relatively poor, the user usually finds it difficult to accurately draw content that the user actually expects to draw, resulting in a great discrepancy between the content that the user expects to draw and content actually drawn by the user on the whiteboard.

Specifically, in FIG. 1, the user actually expects to draw a portrait of a baker. However, when the user draws a portrait on the whiteboard of the notebook computer by controlling the mouse, it is difficult for the user to accurately draw the portrait of the baker with a visual and obvious feature due to poor controllability of the mouse. As a result, effect of displaying created content by the user by using the whiteboard is poor.

In view of this, this embodiment provides a method for enabling whiteboard drawing. When a user joins a conference by using a first electronic device, the user may send a request to a second electronic device by using the first electronic device, so that the second electronic device shares, based on the request, a whiteboard drawing picture on the second electronic device in the conference joined by the first electronic device. In this way, when the user joins a conference by using an electronic device, the user can draw whiteboard content based on another electronic device having a stronger whiteboard drawing capability. This reduces difficulty in drawing content on the whiteboard by the user and helps the user accurately draw content that the user expects to create.

For ease of understanding, the following first describes scenarios to which a method for enabling whiteboard drawing according to an embodiment of this application is applied.

FIG. 2 is a diagram of an architecture of an application scenario according to an embodiment of this application.

As shown in FIG. 2, an electronic device 100 may establish a wireless connection to an electronic device 200 by using Wi-Fi, Bluetooth, a wireless screen transmitter, or another wireless communication mode. The wireless screen transmitter is a wireless communication device. After the wireless screen transmitter is inserted into the electronic device 100, the electronic device 100 can establish a wireless communication connection to the electronic device 200 by using the wireless screen transmitter. Alternatively, the electronic device 100 may establish a connection to the electronic device 200 in a wired manner. In addition, the electronic device 100 may join an online conference by installing conferencing software and starting the conferencing software, to establish a connection to a conferencing server 300, and share, by using the conferencing server 300, audio, a video, and display content with another electronic device joining the same conference.

After the electronic device 100 joins the conference and establishes a connection to the electronic device 200, the electronic device 100 may send a request to the electronic device 200, to request the electronic device 200 to provide a whiteboard drawing function for the conference joined by the electronic device 100, that is, the electronic device 200 shares a whiteboard drawing picture on the electronic device 200 in the conference. The electronic device 200 may send the whiteboard drawing picture on the electronic device 200 to the electronic device 100 in real time. The electronic device 100 forwards the whiteboard drawing picture to the conferencing server 300. Then the conferencing server 300 sends the whiteboard drawing picture to each electronic device joining the same conference. In this way, the electronic device 200 shares the whiteboard drawing picture on the electronic device 200 in the conference.

In this way, a user can draw a picture of a whiteboard of the electronic device 200, and another electronic device joining the same conference as the electronic device 100 can view, by using the conference, the whiteboard drawing picture on the electronic device 200.

In this embodiment of this application, the electronic device 100 may alternatively be connected to the electronic device 200 through an adapter device. A universal serial bus (universal serial bus, USB) interface of a data cable may be plugged in the adapter device, and a Type-C interface of the data cable is plugged in the electronic device 100. The adapter device may alternatively be connected to the electronic device 200 by using an adapter cable. The adapter cable may include any one of a high-definition multimedia interface (high-definition multimedia interface, HDMI) adapter cable, a video graphics array (video graphics array, AGI) adapter cable, a digital visual interface (digital visual interface, DVI) adapter cable, and the like. The adapter device in this embodiment of this application may be, for example, a mobile high-definition link (mobile high-definition link, MHL) device. The MHL device may simultaneously transmit an audio signal and a video signal in the electronic device 100 to the electronic device 200 for displaying.

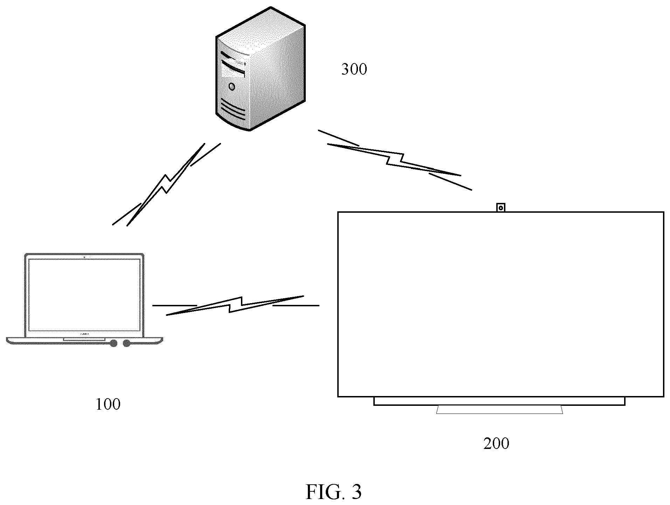

FIG. 3 is a diagram of an architecture of another application scenario according to an embodiment of this application.

As shown in FIG. 3, a difference from the application scenario shown in FIG. 2 lies in that an electronic device 100 and an electronic device 200 may both establish connections to a conferencing server 300 in a wireless communication mode or a wired communication mode. In other words, in addition to establishing a connection between the electronic device 200 and the electronic device 100, the electronic device 200 can further establish a connection to the conferencing server 300, to implement mutual communication between the electronic device 200 and the conferencing server.

After the electronic device 100 joins a conference and establishes a connection to the electronic device 200, the electronic device 100 may send a request to the electronic device 200, to request the electronic device 200 to provide a whiteboard drawing function for the conference joined by the electronic device 100, that is, the electronic device 200 shares a whiteboard drawing picture on the electronic device 200 in the conference. In addition, when the electronic device 100 sends the request to the electronic device 200, the electronic device 100 may send address information of the conferencing server 300 to the electronic device 200, so that the electronic device 200 can establish a connection to the conferencing server 300.

After the electronic device 200 obtains the request of the electronic device 100, the electronic device 200 may first establish a connection to the conferencing server 300. Then the electronic device 200 may send the whiteboard drawing picture on the electronic device 200 to the conferencing server 300 in real time, and the conferencing server 300 sends the whiteboard drawing picture to each electronic device joining the same conference. In this way, the electronic device 200 shares the whiteboard drawing picture on the electronic device 200 in the conference.

Specifically, a method provided in an embodiment of this application may be applied to the electronic device 100 and the electronic device 200 shown in FIG. 2 and FIG. 3.

In the architectures of the application scenarios shown in FIG. 2 and FIG. 3, in a possible implementation, the electronic device 100 may be used as a master device, the electronic device 200 may be used as a slave device, and the electronic device 200 provides the whiteboard drawing function only for the conference joined by the electronic device 100. In other words, the electronic device 200 shares only the whiteboard drawing function on the electronic device 200 in the conference joined by the electronic device 100, and does not share other content on the electronic device 200 in the conference.

In another possible implementation, in addition to providing the whiteboard drawing function for the conference joined by the electronic device 100, the electronic device 200 may further provide another function for the conference. For example, the electronic device 200 may provide a sound pickup function, a speaker output function, and/or a recording function for the conference. To be specific, the electronic device 200 may enable a microphone of the electronic device 200 to pick up sound in a current conference room, to provide clearer recorded audio content for the conference; the electronic device 200 may also enable a speaker of the electronic device 200 to play audio content in the conference joined by the electronic device 100, to provide better audio experience for the user; and the electronic device 200 may further enable a camera of the electronic device 200 to photograph a scene of the current conference room, to provide clearer recorded video content for the conference.

In addition, in a process in which the electronic device 200 provides the whiteboard drawing function for the conference, the electronic device 200 may provide a whiteboard sharing mode or a whiteboard collaboration mode for the conference.

In the whiteboard sharing mode, the electronic device 200 shares the whiteboard drawing picture on the electronic device 200 only in the conference joined by the electronic device 100, that is, another electronic device joining the conference cannot participate in modifying the whiteboard drawing picture (that is, cannot participate in drawing whiteboard content).

In the whiteboard collaboration mode, the electronic device 200 and another electronic device joining the conference collaborate to draw whiteboard content together. In other words, the another electronic device joining the same conference as the electronic device 100 can send a whiteboard drawing operation or an updated whiteboard drawing picture to the electronic device 200 by using the electronic device 100 or the conferencing server 300, so that the another electronic device and the electronic device 200 participate in drawing whiteboard content together.

The foregoing describes the scenarios to which a method for enabling whiteboard drawing according to an embodiment of this application is applied. The following describes an electronic device to which a method for enabling whiteboard drawing according to an embodiment of this application is applied.

A method provided in an embodiment of this application may be applied to an electronic device that can join a conference or an electronic device that has a whiteboard drawing capability. For example, an electronic device in an embodiment of this application may be a smartphone (mobile phone), a personal computer (personal computer, PC), a notebook computer, a tablet computer, a conference tablet, a smart television, a tiled display, a projector, a wearable device (such as a smartwatch, smart glasses, or a smart helmet), a virtual reality (virtual reality, VR) device, an augmented reality (augmented reality, AR) device, a wireless electronic device in industrial control (industrial control), a wireless electronic device in self driving (self driving), a wireless electronic device in remote medical surgery (remote medical surgery), a wireless electronic device in a smart grid (smart grid), a wireless electronic device in a smart city (smart city), or a wireless electronic device in a smart home (smart home). A specific form of the electronic device is not specifically limited in the following embodiments.

The application scenarios shown in FIG. 2 and FIG. 3 are used as an example. The electronic device 100 joining the conference may be, for example, a device such as a smartphone, a notebook computer, a tablet computer, or a personal computer; and the electronic device 200 providing the whiteboard drawing function may be, for example, a large-screen display device such as a conference tablet, a smart television, or a tiled display.

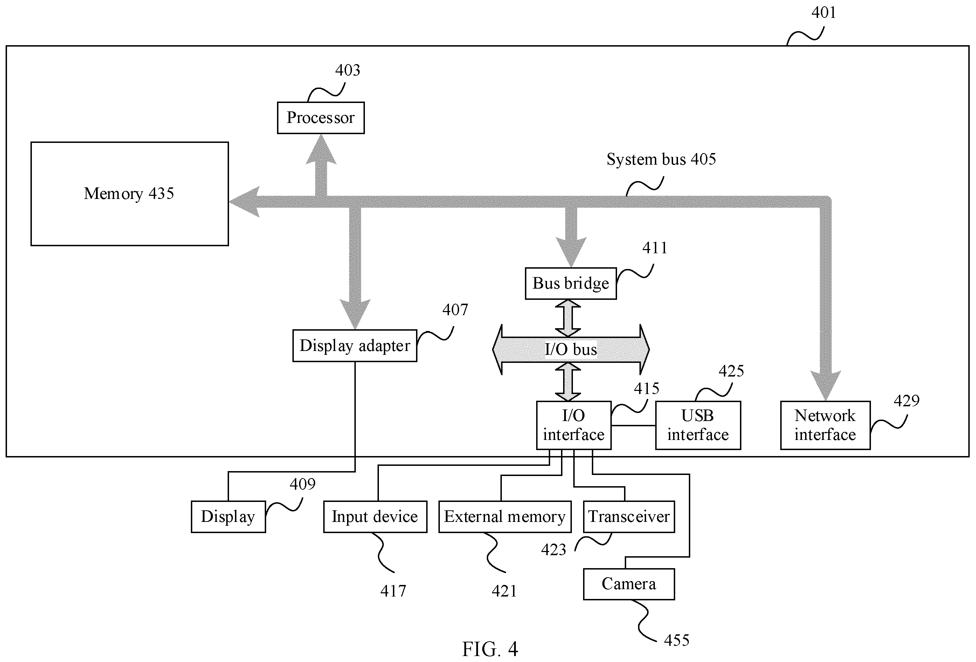

FIG. 4 is a diagram of a structure of an electronic device 401 according to an embodiment of this application. The electronic device 401 shown in FIG. 4 may be the foregoing electronic device 100 or electronic device 200. As shown in FIG. 4, the electronic device 401 includes a processor 403, and the processor 403 is coupled to a system bus 405. The processor 403 may be one or more processors, and each processor may include one or more processor cores. A display adapter (video adapter) 407 may drive a display 409, and the display 409 is coupled to the system bus 405. The system bus 405 is coupled to an input/output (I/O) bus through a bus bridge 411. An I/O interface 415 is coupled to the I/O bus. The I/O interface 415 communicates with a plurality of I/O devices, such as an input device 417 (for example, a touchscreen), an external memory 421 (for example, a hard disk, a floppy disk, an optical disc, or a USB flash drive), a multimedia interface, a transceiver 423 (which may send and/or receive a radio communication signal), a camera 455 (which may capture still and dynamic digital video images), and an external USB interface 425. Optionally, an interface connected to the I/O interface 415 may be a USB interface.

The processor 403 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus, for example, an ASIC.

The electronic device 401 may communicate with another electronic device through a network interface 429, to implement data transmission in a projection process.

The processor 403 may communicate with a memory 435 through the system bus 405, and fetch instructions and data in an application program from the memory 435 to execute the program.

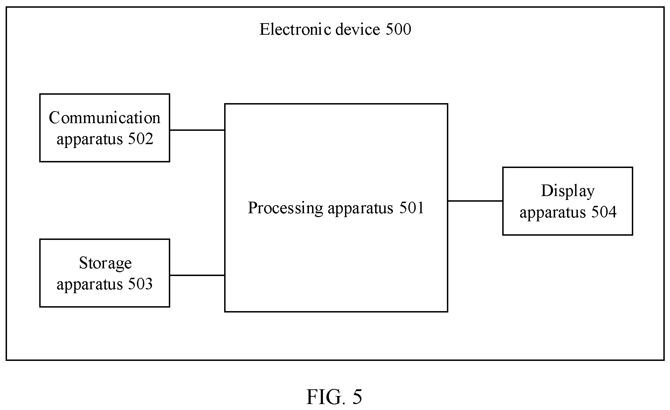

FIG. 5 is a diagram of a structure of an electronic device 500 according to an embodiment of this application. The electronic device 500 shown in FIG. 5 may be the foregoing electronic device 200, that is, the electronic device 500 is a device that provides a whiteboard drawing function. As shown in FIG. 5, the electronic device 500 includes a processing apparatus 501, a communication apparatus 502, a storage apparatus 503, and a display apparatus 504.

The communication apparatus 502 may include a Wi-Fi module, a general packet radio service (General Packet Radio service) module, a high-definition multimedia interface (High Definition Multimedia Interface, HDMI) module, a communication module of another wireless communication network or wired communication network, or the like. The communication apparatus 502 is configured to implement data exchange between the electronic device 500 and another device. In this embodiment of this application, the communication apparatus 502 may further include a communication apparatus that supports implementation of a wireless projection function, for example, a projection connection unit. This is not limited in this application. In addition, based on an actual requirement, the communication apparatus 502 may further include an interface such as a USB interface or a serial/parallel interface, configured to implement data exchange between components inside the electronic device. The interface may be determined based on a product type of the electronic device. A structure included in the communication apparatus 502 and a communication mode of the communication apparatus are not limited in this application, and may be determined based on a case.

In some embodiments, when the communication apparatus 502 includes a plurality of input interfaces, for example, a plurality of HDMI interfaces, one of the HDMI interfaces may be selected to transmit wireless projection data, and another HDMI interface may further receive other multimedia data, so that the electronic device can normally output, in a non-wireless projection mode, the multimedia data received by the another HDMI interface.

The storage apparatus 503 may be configured to store a program for implementing a method for enabling whiteboard drawing as described in the following method embodiments. The processing apparatus 501 is configured to load and execute the program stored in the storage apparatus 503, to implement steps of the method for enabling whiteboard drawing.

In some embodiments, the storage apparatus 503 may include a high speed random access memory, or may include a nonvolatile memory, for example, at least one magnetic disk storage device or another volatile solid-state storage device. In this application, respective composition structures and functions of the storage apparatus 503 and the processing apparatus 501 are not described in detail, and are determined based on a case.

The display apparatus 504 may include an apparatus such as a touch sensing unit or a display for sensing a touch event on a touch display panel. The display apparatus 504 is configured to display a whiteboard drawing picture provided by the electronic device 500, and obtain, by using the touch sensing unit, a drawing operation performed by a user on the whiteboard drawing picture, to update the whiteboard drawing picture. A type of the display apparatus 504 and an operating principle thereof for displaying content are not described in detail in this embodiment of this application.

It should be understood that structures of the electronic devices shown in FIG. 4 and FIG. 5 do not constitute a limitation on the electronic device in embodiments of this application. During actual application, the electronic device may include more or fewer components than those shown in FIG. 4 and FIG. 5, or combine some components, for example, at least one output device such as a speaker, a vibration mechanism, or a light, and at least one input device such as a keyboard, a mouse, or a pickup device. An exhaustive list is not provided in embodiments of this application.

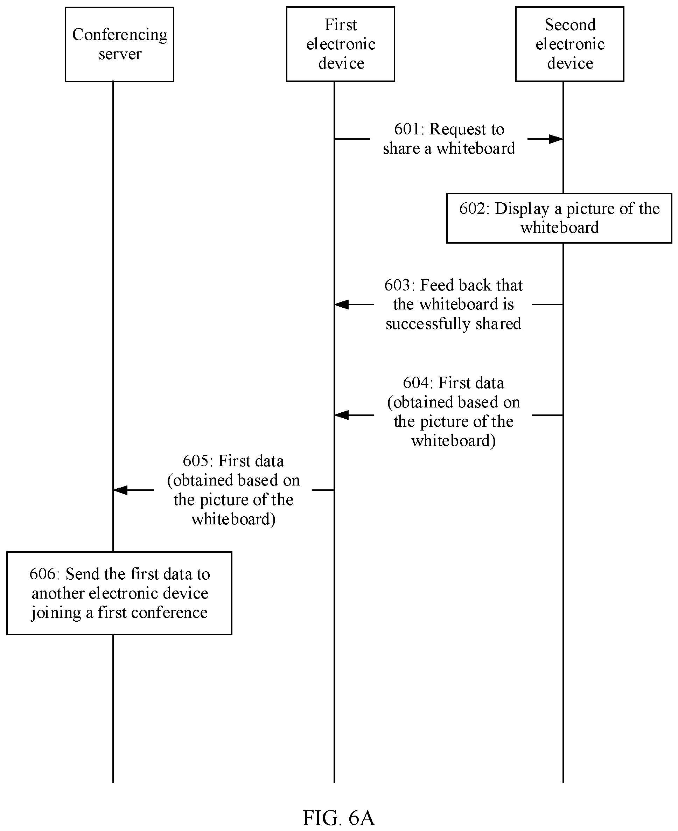

FIG. 6A is a schematic flowchart of a method for enabling whiteboard drawing according to an embodiment of this application. As shown in FIG. 6A, a procedure of the method for enabling whiteboard drawing includes the following steps 601 to 606.

Step 601: A first electronic device sends a first request message to a second electronic device, where the first request message is used to request the second electronic device to share a whiteboard on the second electronic device in a first conference, and the first conference is a conference joined by the first electronic device.

In this embodiment, the first electronic device may be, for example, a mobile terminal such as a smartphone, a notebook computer, a tablet computer, or a personal computer. The second electronic device may be, for example, a conference device such as a conference tablet, a smart television, or an electronic whiteboard. Generally, the second electronic device may be a large-screen device capable of handwriting on the whiteboard (that is, capable of performing whiteboard drawing on a screen by using a stylus), and a display screen of the second electronic device is usually larger than a display screen of the first electronic device, so that a higher whiteboard drawing capability is provided (that is, the whiteboard drawing capability of the second electronic device is higher than that of the first electronic device).

A communication connection may be established in advance between the first electronic device and the second electronic device, so that the first electronic device can implement data exchange with the second electronic device.

Optionally, the first electronic device may establish a connection to the second electronic device by using a cable (for example, a universal serial bus (Universal Serial Bus, USB) cable or an HDMI cable), a wireless network (for example, Wi-Fi or Bluetooth), or a wireless screen transmitter.

In a possible implementation, a physical connection may be established between the first electronic device and the second electronic device by using a USB cable. In addition, in a process in which the first electronic device establishes a communication connection to the second electronic device, the first electronic device loads the second electronic device as a virtual camera. In other words, for the first electronic device, the second electronic device may be considered as a camera, and the first electronic device may receive, in the same way as receiving a shot picture returned by the camera, a whiteboard drawing picture returned by the second electronic device. Specifically, the first electronic device may communicate with the second electronic device by using the universal serial bus video class (USB Video Class, UVC) protocol. The UVC protocol is a protocol standard defined for a USB video capture device.

In another possible implementation, the first electronic device may load the second electronic device as a virtual human interface device (Human Interface Device, HID), and the first electronic device communicates with the second electronic device by using the HID protocol.

Generally, the first electronic device loads the second electronic device as a virtual camera or a virtual HID, and communicates with the second electronic device by using the UVC or HID protocol, so that the second electronic device can provide a whiteboard drawing function for the conference based on the existing protocol, thereby reducing changes to the conventional technology and enhancing feasibility of the solution.

The first electronic device may join an online conference by using built-in conferencing software or by logging in to a web page. Therefore, after the first electronic device establishes a communication connection to the second electronic device, when the first electronic device expects the second electronic device to provide the whiteboard drawing function for the conference joined by the first electronic device, the first electronic device may trigger sending of the first request message to the second electronic device. Sharing the whiteboard on the second electronic device may specifically refer to sharing a picture of the whiteboard on the second electronic device.

For example, after receiving an instruction issued by a user, the first electronic device may trigger sending of the first request message to the second electronic device. For example, the user may issue, on the first electronic device, an instruction for performing whiteboard sharing in the conference, and further instruct the second electronic device to provide the picture of the whiteboard that needs to be shared.

Step 602: The second electronic device displays the picture of the whiteboard, where the whiteboard drawing picture is shared in the first conference.

After the second electronic device receives the first request message, if whiteboard software or a whiteboard component is not started, the second electronic device may start the corresponding whiteboard software or whiteboard component (that is, a software module that provides the whiteboard drawing function) according to an instruction of the first request message, to display the picture of the whiteboard on the display screen of the second electronic device. If the whiteboard software or the whiteboard component is started, the second electronic device may switch, according to the instruction of the first request message, the whiteboard software or the whiteboard component to foreground for running, so as to display the picture of the whiteboard on the display screen of the second electronic device.

The picture of the whiteboard initially displayed by the second electronic device is a blank picture. In addition, after the second electronic device starts displaying the picture of the whiteboard, the second electronic device is always ready to receive a drawing instruction of the user for the whiteboard, so as to update the picture of the whiteboard in real time.

Step 603: The second electronic device sends a first response message to the first electronic device, where the first response message indicates that the second electronic device successfully shares the whiteboard on the second electronic device in the first conference.

After the second electronic device successfully displays the picture of the whiteboard, the second electronic device may return the first response message to the first electronic device, to indicate that the second electronic device successfully shares the whiteboard in the first conference.

Step 604: The second electronic device sends first data to the first electronic device, where the first data is obtained based on the picture of the whiteboard on the second electronic device, and the first data is used to share the picture of the whiteboard in the first conference.

After the second electronic device successfully displays the picture of the whiteboard on the display screen, the user may draw content on the picture of the whiteboard displayed by the second electronic device. For example, when the second electronic device is a conference tablet with a touchscreen, the user may freely draw content on the touchscreen of the conference tablet by using a stylus, to issue a drawing instruction to the conference tablet, so as to update the picture of the whiteboard on the conference tablet.

In this way, after the second electronic device updates the picture of the whiteboard by receiving the drawing instruction issued by the user, the second electronic device may trigger sending of the first data to the first electronic device, where the first data is obtained based on the current picture of the whiteboard on the second electronic device.

For example, when the first electronic device communicates with the second electronic device by using the UVC protocol, the first data may include an image, and the image is obtained based on the picture of the whiteboard. Specifically, because the UVC protocol is usually used to transmit an image shot by a camera, the UVC protocol is actually a protocol for transmitting an image after the image is encoded. When the second electronic device transmits the picture of the whiteboard to the first electronic device by using the UVC protocol, the second electronic device may encode the picture of the whiteboard based on a requirement of the UVC protocol to obtain an encoded image (that is, the foregoing image), and transmit the encoded image to the first electronic device.

Alternatively, when the first electronic device communicates with the second electronic device by using the HID protocol, the first data may include a first drawing instruction, and the first drawing instruction indicates a drawing process of the picture of the whiteboard. In other words, the second electronic device may generate the first drawing instruction based on the picture of the whiteboard (for example, the second electronic device may generate the first drawing instruction in a serialization mode), to instruct how to draw the picture of the whiteboard. In this way, after receiving the first drawing instruction, another electronic device may draw, based on an instruction of the first drawing instruction, a picture identical to the picture of the whiteboard displayed on the second electronic device, so as to implement whiteboard sharing.

Step 605: The first electronic device sends the first data to a conferencing server, where the conferencing server is connected to an electronic device joining the first conference.

After the first electronic device obtains the first data sent by the second electronic device, the first electronic device forwards the first data to the conferencing server, so that the conferencing server can forward the first data to another electronic device joining the conference.

In other words, the first electronic device actually serves as a forwarder between the second electronic device and the conferencing server to forward the first data to the conferencing server for the second electronic device, so that the second electronic device can implement whiteboard sharing without joining the conference.

The first electronic device is responsible for forwarding the picture of the whiteboard between the second electronic device and the conferencing server, so that the second electronic device does not need to join the conference. It can be ensured that the user can perform an operation of joining the conference on the first electronic device familiar to the user, and there is no need to configure the second electronic device to join the conference. Therefore, convenience of whiteboard sharing is improved.

It should be noted that, after the first electronic device obtains the first data, the first electronic device may also obtain the picture of the whiteboard by parsing the first data, and display the picture of the whiteboard on the display screen of the first electronic device. In other words, the first electronic device may also update, based on the first data, the picture displayed on the first electronic device, so that the first electronic device can synchronously display the whiteboard drawing picture on the second electronic device in real time.

Certainly, because the user of the first electronic device may currently draw the picture of the whiteboard on the second electronic device, the display screen of the first electronic device is not viewed in most cases. Therefore, the first electronic device may forward the first data only to the conferencing server, and does not need to obtain the corresponding picture of the whiteboard by parsing the first data, thereby saving processing resources of the first electronic device.

Step 606: The conferencing server sends the first data to another electronic device joining the first conference.

Similarly, after receiving the first data, the conferencing server sends the first data to another electronic device joining the same conference as the first electronic device, so that the another electronic device can generate and display a corresponding picture of the whiteboard based on the first data. Therefore, an objective of sharing the whiteboard by the second electronic device with the another electronic device in the conference is achieved.

This embodiment provides a method for enabling whiteboard drawing. When the user joins a conference by using the first electronic device, the user may send a request to the second electronic device by using the first electronic device, so that the second electronic device shares, based on the request, the whiteboard on the second electronic device in the conference joined by the first electronic device. In this way, when the user joins a conference by using an electronic device, the user can draw whiteboard content based on another electronic device having a stronger whiteboard drawing capability. This reduces difficulty in drawing content on the whiteboard by the user and helps the user accurately draw content that the user expects to create.

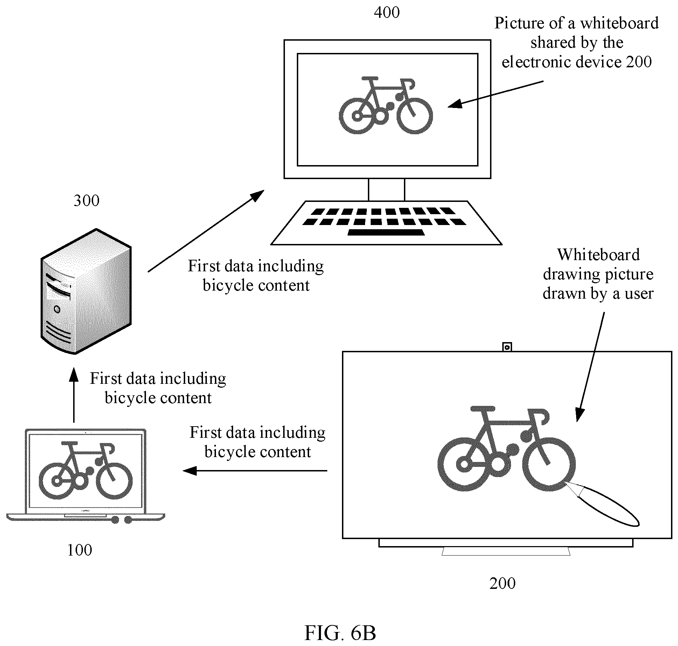

For example, FIG. 6B is a diagram in which a second electronic device provides whiteboard sharing for a conference according to an embodiment of this application. In FIG. 6B, an electronic device 100 and an electronic device 400 join a same conference, and both the electronic device 100 and the electronic device 400 establish communication connections to a conferencing server 300 to exchange content in the conference. In addition, the electronic device 100 further establishes a connection to an electronic device 200, and the electronic device 100 sends a request message to request the electronic device 200 to share a whiteboard in a conference joined by the electronic device 100. The electronic device 100 is, for example, the foregoing first electronic device. The electronic device 200 is, for example, the foregoing second electronic device.

After a user draws a corresponding picture of the whiteboard (content on the picture of the whiteboard is a bicycle) on the electronic device 200 by using a stylus or the like, the electronic device 200 generates first data based on the picture of the whiteboard, where the first data includes an image with bicycle content. Then the electronic device 200 sends the first data to the electronic device 100. Then the electronic device 100 forwards the first data to the conferencing server 300, and the conferencing server 300 finally sends the first data to the electronic device 400 joining the same conference as the electronic device 100. In this way, after receiving the first data, the electronic device 400 can obtain, by parsing the first data, a whiteboard drawing picture shared by the electronic device 200.

In addition, after the electronic device 100 receives the first data, the electronic device 100 may also parse the first data to obtain the picture of the whiteboard shared by the electronic device 200, and display the picture of the whiteboard on a display screen of the electronic device 100.

Compared with the electronic device 100 that does not support touch-screen drawing of content and has a relatively small display screen, the electronic device 200 supports handwritten touch-screen drawing of whiteboard content, and the electronic device 200 has a relatively large display screen for drawing whiteboard content. This can effectively reduce difficulty in drawing content on the whiteboard by the user and help the user accurately draw content that the user expects to create.

The foregoing describes a process in which the second electronic device shares the whiteboard of the second electronic device in the conference joined by the first electronic device. In some embodiments, in addition to sharing the whiteboard with another electronic device in the conference, the second electronic device may further perform whiteboard collaboration with the another electronic device in the conference, that is, participate in drawing the picture of the whiteboard together with the another electronic device in the conference.

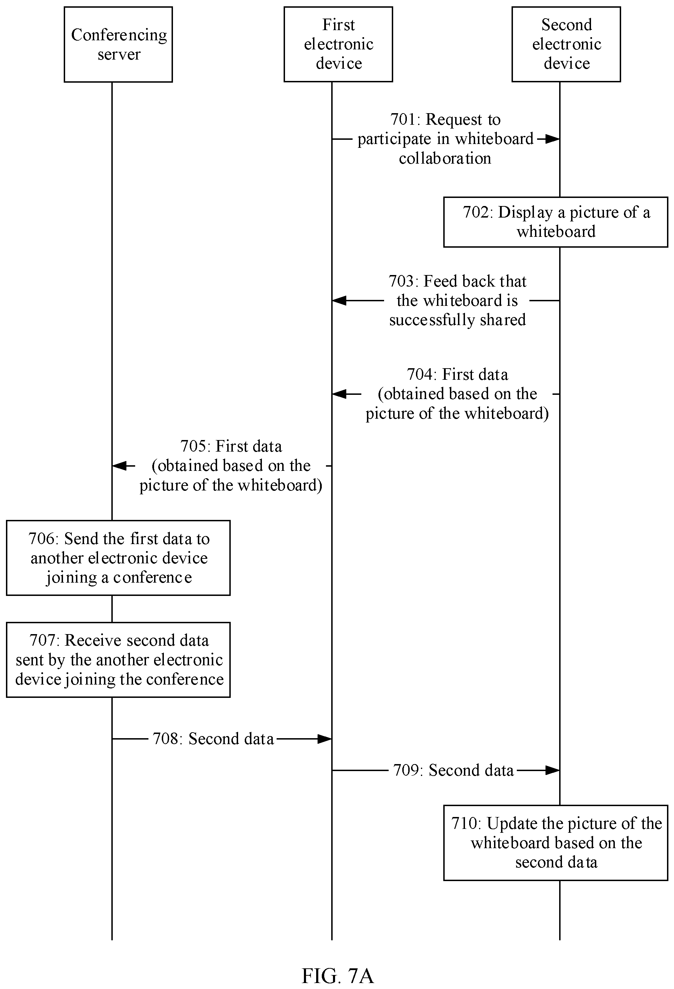

FIG. 7A is a schematic flowchart of another method for enabling whiteboard drawing according to an embodiment of this application. As shown in FIG. 7A, a procedure of the method for enabling whiteboard drawing includes the following steps 701 to 710.

Step 701: A first electronic device sends a first request message to a second electronic device, where the first request message is used to request the second electronic device to share a whiteboard on the second electronic device in a first conference.

Specifically, the first request message may further indicate the second electronic device and another electronic device in the conference to participate in drawing a picture of the whiteboard together. In other words, in addition to sharing the picture of the whiteboard on the second electronic device in the conference joined by the first electronic device, the second electronic device may further receive, from another electronic device in the conference, an instruction for updating the picture of the whiteboard, to update the picture of the whiteboard. In other words, the first electronic device requests the second electronic device to participate in whiteboard collaboration.

Step 702: The second electronic device displays the picture of the whiteboard, where the picture of the whiteboard is shared in the first conference.

Step 703: The second electronic device sends a first response message to the first electronic device, where the first response message indicates that the second electronic device successfully shares the picture of the whiteboard on the second electronic device in the first conference.

Step 704: The second electronic device sends first data to the first electronic device, where the first data is obtained based on the picture of the whiteboard on the second electronic device, and the first data is used to share the picture of the whiteboard in the first conference.

Step 705: The first electronic device sends the first data to a conferencing server.

Step 706: The conferencing server sends the first data to another electronic device joining the first conference.

In this embodiment, steps 702 to 706 are similar to the foregoing steps 602 to 606. For details, refer to the foregoing steps 602 to 606. Details are not described herein again.

In this embodiment, in addition to the first electronic device, the another electronic device, for example, a third electronic device, may join the first conference. Therefore, after the conferencing server sends the first data to the third electronic device, the first data is used to display the picture of the whiteboard on the third electronic device.

Step 707: The conferencing server receives second data sent by the third electronic device joining the first conference.

In this embodiment, because the second electronic device and the another electronic device joining the first conference collaboratively perform whiteboard drawing, when a user further draws, on the third electronic device joining the first conference, the picture of the whiteboard shared by the second electronic device, the third electronic device joining the first conference generates the second data based on content newly drawn by the user, and sends the second data to the second electronic device by using the conferencing server.

Simply, there is no unidirectional data transmission process between the second electronic device and the third electronic device joining the first conference, but a bidirectional data exchange process, that is, the third electronic device joining the first conference can also feed back a corresponding picture of the whiteboard to the second electronic device.

In a possible implementation, the second data may include a second drawing instruction, and the second drawing instruction indicates a drawing process performed by the third electronic device on the picture of the whiteboard shared by the second electronic device.

In another possible implementation, the second data may also include an image, and the image is obtained after the third electronic device performs a new drawing operation on the picture of the whiteboard shared by the second electronic device.

Step 708: The conferencing server sends the second data to the first electronic device.

Step 709: The first electronic device sends the second data to the second electronic device.

Step 710: The second electronic device executes the second drawing instruction to update the picture of the whiteboard.

After receiving the second data, the second electronic device may execute the second drawing instruction in the second data to update the picture of the whiteboard currently displayed by the second electronic device, so that the second electronic device and the third electronic device joining the first conference collaboratively draw the picture of the whiteboard together.

Generally, for the second electronic device and another electronic device joining the first conference, after the user performs, on any electronic device, a new drawing operation on the picture of the whiteboard, the electronic device sends a drawing instruction obtained by performing the new drawing operation to the another electronic device, so that the latest picture of the whiteboard is synchronized on all electronic devices in real time.

The foregoing describes a process in which the second electronic device performs whiteboard collaboration with the third electronic device joining the first conference. During actual application, the first electronic device may also participate in the whiteboard collaboration process, that is, the first electronic device, the second electronic device, and another electronic device that joins the conference participate in the whiteboard collaboration process together.

For example, in the embodiment shown in FIG. 7A, the first electronic device may further obtain a drawing operation performed by the user on the picture of the whiteboard. For example, the user performs an operation of drawing picture content on the picture of the whiteboard on the first electronic device by using a stylus, a mouse, or the like.

Then the first electronic device may generate third data in response to the drawing operation of the user. The third data may include a third drawing instruction, and the third drawing instruction indicates a drawing process performed by the first electronic device on the picture of the whiteboard shared by the second electronic device, that is, indicate a drawing process corresponding to the drawing operation of the user.

Next, the first electronic device sends the third data to the second electronic device and the conferencing server, so that the second electronic device and the another electronic device joining the first conference can update the picture of the whiteboard based on the third data, to implement whiteboard collaboration between electronic devices.

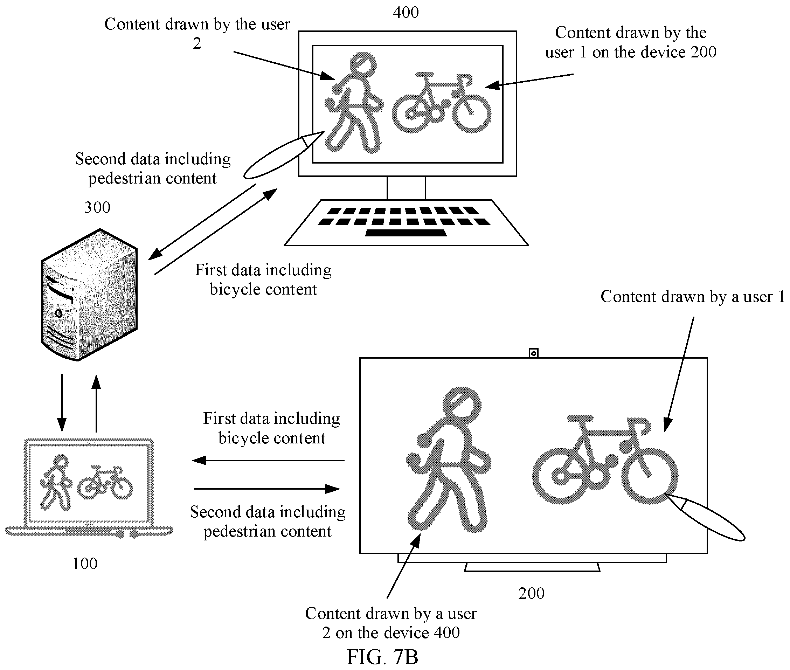

For example, FIG. 7B is a diagram in which a second electronic device provides whiteboard collaboration for a conference according to an embodiment of this application. Similarly to FIG. 6B, in FIG. 7B, an electronic device 100 and an electronic device 400 join a same conference, and both the electronic device 100 and the electronic device 400 establish communication connections to a conferencing server 300. The electronic device 100 further establishes a connection to an electronic device 200, and the electronic device 100 sends a request message to request the electronic device 200 to share a whiteboard in the conference joined by the electronic device 100.

After a user 1 draws a corresponding picture of the whiteboard (content on the picture of the whiteboard is a bicycle) on the electronic device 200 by using a stylus or the like, the electronic device 200 generates first data based on the picture of the whiteboard, where the first data includes a picture image with bicycle content. Then the electronic device 200 sends the first data to the electronic device 400 by using the electronic device 100 and the conferencing server 300. In this way, after receiving the first data, the electronic device 400 can obtain, by parsing the first data, the picture of the whiteboard shared by the electronic device 200.

In a process in which the electronic device 400 displays the whiteboard drawing picture shared by the electronic device 200, a user 2 performs a drawing operation on the whiteboard drawing picture displayed by the electronic device 400, and draws new content (that is, a pedestrian). Therefore, after the user 2 completes the new drawing operation on the electronic device 400, the picture of the whiteboard displayed by the electronic device 400 includes both the content drawn by the user 1 (that is, the bicycle) and the content drawn by the user 2 (that is, the pedestrian). In this case, the electronic device 400 generates second data based on the content drawn by the user 2 on the picture of the whiteboard, where the second data includes the pedestrian content drawn by the user 2, and the electronic device 400 sends the second data to the electronic device 200 by using the conferencing server 300 and the electronic device 100. In this way, the electronic device 200 can update the current picture of the whiteboard by parsing the second data sent by the electronic device 400, thereby synchronizing the picture of the whiteboard on the electronic device 200 and the electronic device 400.

The embodiments described in FIG. 6A and FIG. 7A describe that the second electronic device provides, by using the first electronic device, the whiteboard drawing function for the conference joined by the first electronic device, that is, the first electronic device needs to be responsible for forwarding the picture of the whiteboard on the second electronic device. In some embodiments, the second electronic device may establish a connection to the conferencing server to exchange the picture of the whiteboard with the conferencing server, and the first electronic device does not need to be responsible for forwarding the picture of the whiteboard on the second electronic device.

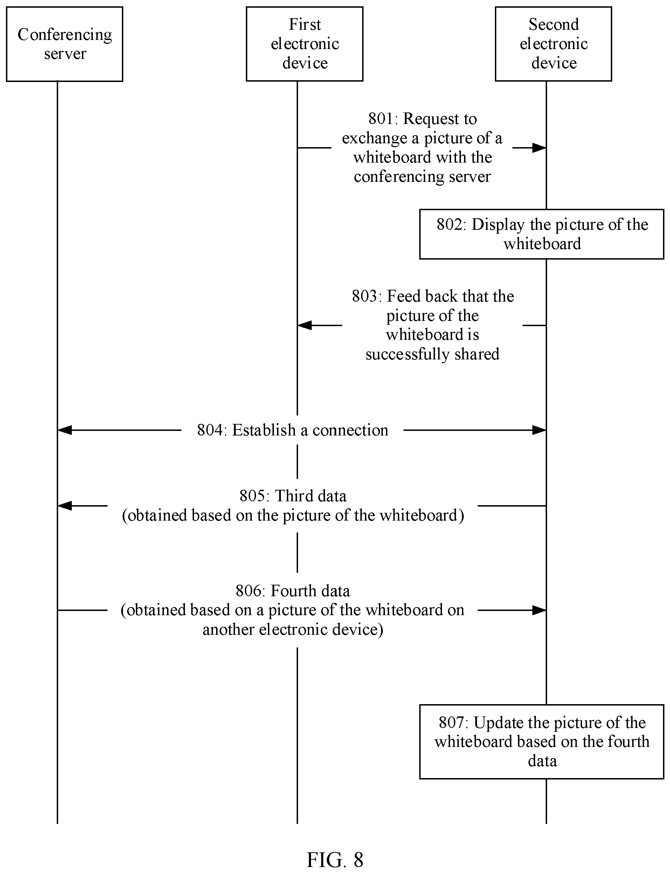

For example, FIG. 8 is a schematic flowchart of a method for enabling whiteboard drawing according to an embodiment of this application. As shown in FIG. 8, the method for enabling whiteboard drawing includes the following steps 801 to 807.

Step 801: A first electronic device sends a first request message to a second electronic device, where the first request message includes an address of a conferencing server, and the first request message is used to request the second electronic device to share a picture of a whiteboard on the second electronic device in a first conference joined by the first electronic device and request the second electronic device to exchange data indicating the picture of the whiteboard with the conferencing server.

In this embodiment, when the first electronic device sends the first request message to the second electronic device, the first request message not only indicates the second electronic device to share the picture of the whiteboard in the conference joined by the first electronic device, but also indicates the second electronic device to subsequently exchange the data indicating the picture of the whiteboard with the conferencing server. In other words, the second electronic device no longer requires the first electronic device to forward the picture of the whiteboard on the second electronic device.

Therefore, the first electronic device may include the address of the conferencing server into the first request message, so that the second electronic device can establish a communication connection to the conferencing server based on the address of the conferencing server carried in the first request message.

Optionally, to ensure privacy security in a communication process, the first electronic device may further obtain, in advance, an authentication credential required for establishing a connection between the second electronic device and the conferencing server, and include the authentication credential into the first request message. In other words, the first request message further includes the authentication credential, and the authentication credential is used to enable the second electronic device to be authenticated by the conferencing server.

Optionally, before the first electronic device sends the first request message to the second electronic device, the first electronic device may send a second request message to the conferencing server, where the second request message indicates the first electronic device to share, by using the second electronic device, the picture of the whiteboard with another electronic device joining the first conference. Then the conferencing server may generate the authentication credential based on the second request message, and return a second response message with the authentication credential to the first electronic device.

In this solution, the first electronic device sends the authentication credential generated by the conferencing server to the second electronic device, so that the second electronic device can establish a secure connection to the conferencing server based on the authentication credential. In this way, unauthorized devices are prevented from connecting to the conferencing server and disrupting normal progress of the conference.

In addition, the first electronic device may further include, into the first request message, information about the conference joined by the first electronic device, for example, a conference number, so that subsequently the second electronic device can accurately share the whiteboard with another electronic device in the conference joined by the first electronic device.

Step 802: The second electronic device displays the picture of the whiteboard, where the picture of the whiteboard is shared in the first conference.

Step 803: The second electronic device sends a first response message to the first electronic device, where the first response message indicates that the second electronic device successfully shares the picture of the whiteboard on the second electronic device in the first conference.

Steps 802 and 803 are similar to the foregoing steps 602 and 603. For details, refer to the foregoing steps 602 and 603. Details are not described herein again.

Step 804: The second electronic device establishes a connection to the conferencing server.

Because the first electronic device instructs, in the first request message, the second electronic device to exchange the picture of the whiteboard with the conferencing server, the second electronic device can establish the connection to the conferencing server according to the instruction of the first request message. For example, the second electronic device may send a connection establishment request to the conferencing server based on the address of the conferencing server included in the first request message; and after the conferencing server returns a connection establishment success response to the second electronic device, it indicates that the second electronic device successfully establishes the connection to the conferencing server.

Optionally, when the first request message includes the authentication credential, the second electronic device may establish the connection to the conferencing server by using the authentication credential. For example, the second electronic device may include the authentication credential into the connection establishment request sent to the conferencing server.

Step 805: The second electronic device sends third data to the conferencing server, where the third data is obtained based on the picture of the whiteboard shared in the conference, and the third data is used to share the picture of the whiteboard in the conference.

After the second electronic device is successfully started and displays a whiteboard drawing picture on a display screen of the second electronic device, a user may draw content on the whiteboard drawing picture displayed by the second electronic device. In this way, after the second electronic device updates the whiteboard drawing picture by receiving a drawing instruction issued by the user, the second electronic device may trigger sending of the third data to the conferencing server, where the third data is obtained based on the current whiteboard drawing picture on the second electronic device.

After the conferencing server receives the third data, the conferencing server may forward the third data to the another electronic device joining the first conference, to share the picture of the whiteboard on the second electronic device with the another electronic device.

Step 806: The second electronic device receives fourth data sent by the conferencing server.

When the second electronic device and the another electronic device joining the conference participate in collaboratively drawing the picture of the whiteboard together, the another electronic device joining the conference may draw the picture of the whiteboard shared by the second electronic device, and generate the fourth data based on newly drawn content. In this way, the another electronic device joining the conference may send the fourth data to the second electronic device by using the conferencing server.

In a possible implementation, the fourth data may include a third drawing instruction, and the third drawing instruction indicates a drawing process performed by the another electronic device on the picture of the whiteboard shared by the second electronic device.

In another possible implementation, the fourth data may also include an image, and the image is obtained after the another electronic device performs a new drawing operation on the picture of the whiteboard shared by the second electronic device.

It should be noted that, when the second electronic device shares the whiteboard only with the another electronic device joining the conference, and does not participate in collaboratively drawing the picture of the whiteboard, the second electronic device sends only the picture of the whiteboard on the second electronic device to the conferencing server. However, because the another electronic device joining the conference cannot perform a drawing operation on the picture of the whiteboard shared by the second electronic device, the second electronic device does not receive the picture of the whiteboard forwarded by the conferencing server.

Step 807: The second electronic device updates the picture of the whiteboard based on the fourth data to obtain an updated picture of the whiteboard.

Generally, in this embodiment, the second electronic device exchanges, by using the conferencing server, the picture of the whiteboard with the another electronic device joining the conference, so that the picture of the whiteboard is shared or collaboratively processed.

In this solution, the second electronic device establishes the connection to the conferencing server, so that the second electronic device shares the whiteboard with the another electronic device joining the conference. Therefore, a process in which the first electronic device forwards the picture of the whiteboard for the second electronic device can be omitted, processing pressure of the first electronic device is reduced, and processing resources and bandwidth resources of the first electronic device are saved.

The foregoing describes an execution procedure of the method for enabling whiteboard drawing according to embodiments of this application. For ease of understanding, the following describes in detail an implementation process of the method for enabling whiteboard drawing during actual application with reference to specific examples.

In this embodiment, the first electronic device may establish a connection to the second electronic device in a plurality of modes, so that the second electronic device can provide a whiteboard drawing function for the conference joined by the first electronic device. For example, in a possible implementation, the first electronic device loads the second electronic device as a virtual camera, and interacts with the second electronic device by using the UVC protocol. In another possible implementation, the first electronic device loads the second electronic device as a HID, and interacts with the second electronic device by using the HID protocol.

The following first describes in detail how the first electronic device loads the second electronic device as a virtual camera based on various connection modes to implement interaction with the second electronic device.

Mode 1.1: The first electronic device connects to the second electronic device by using a cable, and loads the second electronic device as a virtual camera.

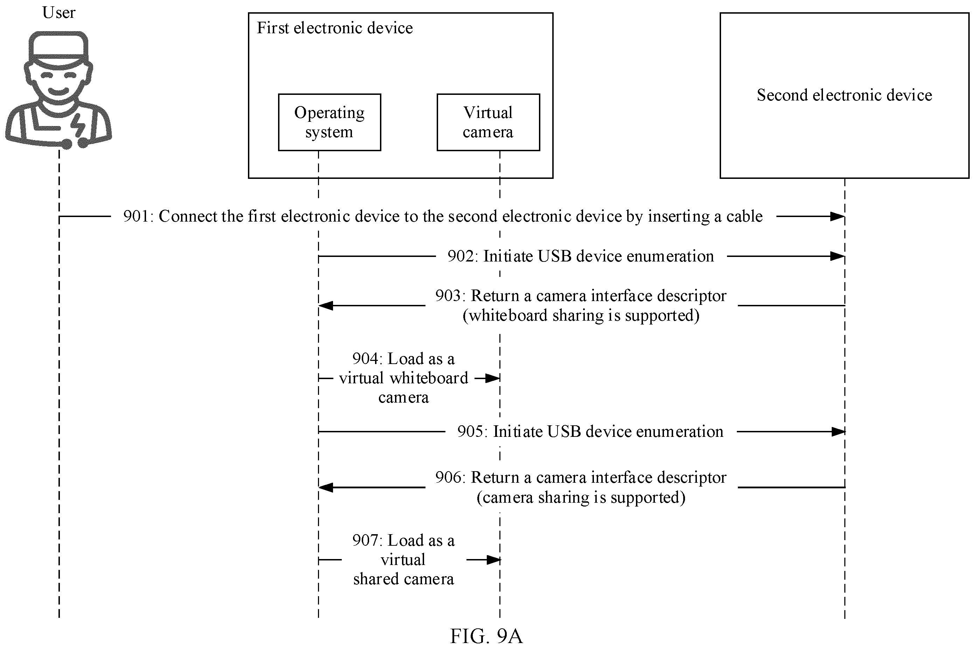

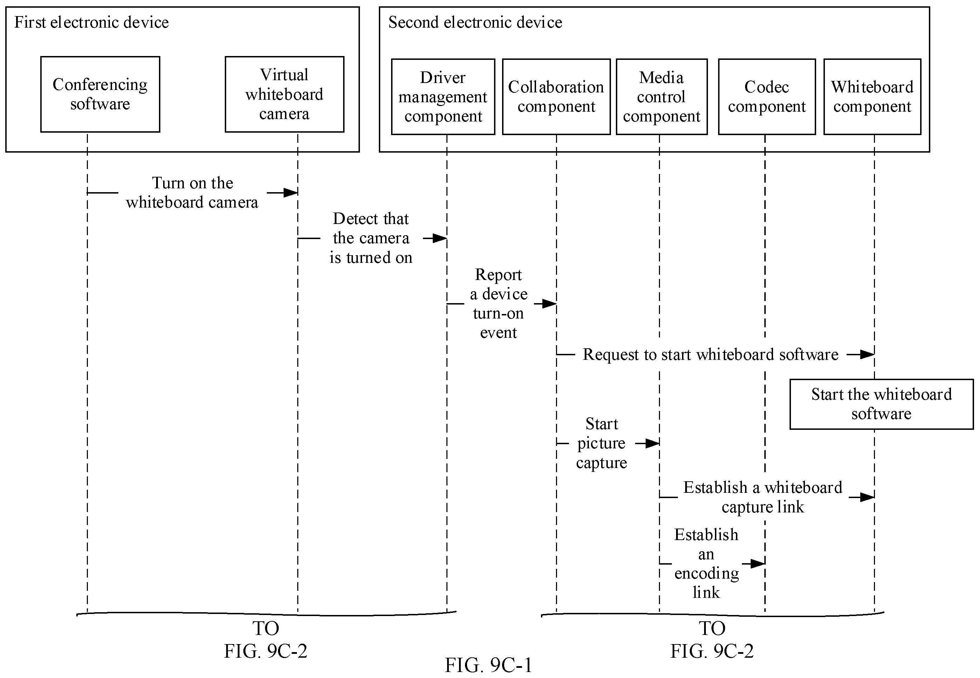

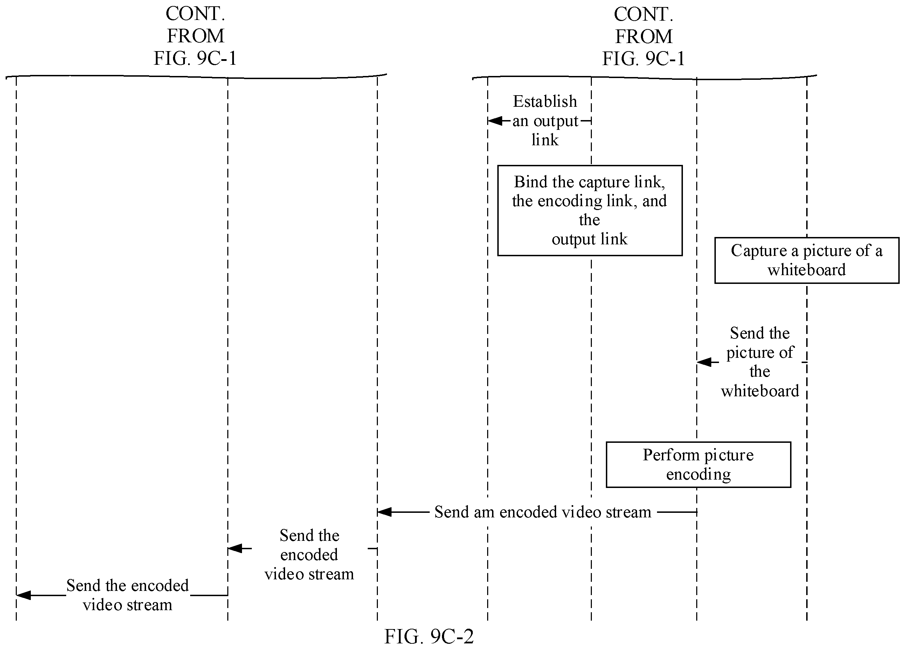

For example, FIG. 9A is a schematic flowchart in which a first electronic device connects to a second electronic device by using a cable and loads the second electronic device as a virtual camera according to an embodiment of this application. FIG. 9A includes the following steps 901 to 907.

Step 901: A user connects the first electronic device to the second electronic device by inserting the cable.

The cable used to connect the first electronic device to the second electronic device may be a USB cable, for example, a Type-C cable. The first electronic device may be, for example, a personal computer, a notebook computer, a tablet computer, or a smartphone. The second electronic device may be, for example, a conference tablet or a smart television.

Step 902: An operating system of the first electronic device initiates USB device enumeration for the second electronic device.

After the user connects the first electronic device to the second electronic device by inserting the cable, the operating system (for example, a Windows system or a Mac system) on the first electronic device may detect that a physical device is connected, and therefore initiate the USB device enumeration.

The USB device enumeration means that the first electronic device sends a request to the second electronic device to obtain a descriptor returned by the second electronic device and then recognize an identity of the second electronic device.

Step 903: The second electronic device returns a camera interface descriptor to the first electronic device, to indicate that whiteboard sharing is supported.

During the USB device enumeration, after receiving the request sent by the first electronic device, the second electronic device detects whether the second electronic device has a whiteboard sharing capability, and when the second electronic device has the whiteboard sharing capability, returns a corresponding UVC camera interface descriptor to the first electronic device, to indicate that the second electronic device supports whiteboard sharing.

Step 904: The operating system of the first electronic device loads the second electronic device as a virtual whiteboard camera.

After receiving the camera interface descriptor returned by the second electronic device, the operating system of the first electronic device may load the second electronic device as the virtual whiteboard camera based on the camera interface descriptor. Specifically, the UVC camera interface descriptor returned by the second electronic device may include information such as a virtual device manufacturer, a device name (for example, a whiteboard camera), a supported resolution, a frame rate, and a video format.

Step 905: The operating system of the first electronic device initiates USB device enumeration for the second electronic device.

Optionally, in some embodiments, in addition to expecting the second electronic device to provide a whiteboard sharing function for a conference, the first electronic device may further expect the second electronic device to provide a camera to the first electronic device for use. In this case, the operating system of the first electronic device may continue to initiate the USB device enumeration for the second electronic device.

Step 906: The second electronic device returns a camera interface descriptor to the first electronic device, to indicate that camera sharing is supported.

In this step, after receiving the request sent by the first electronic device, the second electronic device detects whether the second electronic device has a camera sharing capability, and when the second electronic device has the camera sharing capability, returns a corresponding UVC camera interface descriptor to the first electronic device, to indicate that the second electronic device supports camera sharing.

Step 907: The operating system of the first electronic device loads the second electronic device as a virtual shared camera.

It should be noted that the first electronic device and the second electronic device may be connected by using a USB cable, and that the second electronic device is loaded as the virtual whiteboard camera and the virtual shared camera at the same time. In addition, in a subsequent interaction process, a picture of a whiteboard and a picture of the camera of the second electronic device may also be transmitted by using the same USB cable.

The first electronic device and the second electronic device may be connected by using two different USB cables. The first electronic device loads the second electronic device as the virtual whiteboard camera based on one USB cable, and loads the second electronic device as the virtual shared camera based on the other USB cable. In addition, in a subsequent interaction process, the picture of the whiteboard and the picture of the camera of the second electronic device are respectively transmitted by using different USB cables.

After the first electronic device completes loading of the second electronic device as the virtual whiteboard camera, a whiteboard sharing instruction issued by the user may trigger the first electronic device to request the second electronic device to share the whiteboard.

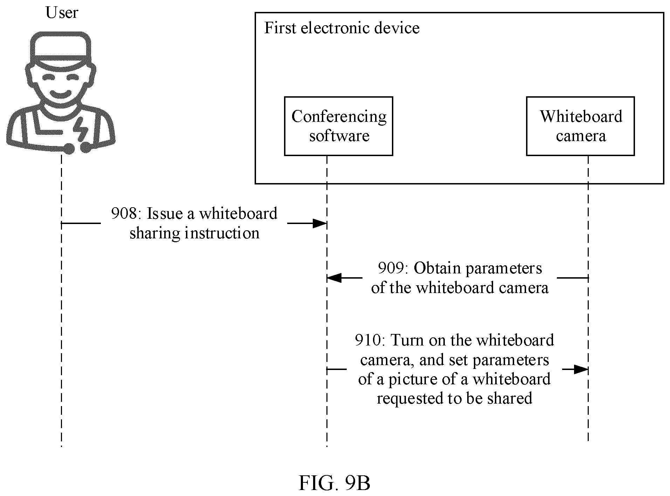

For example, FIG. 9B is a schematic flowchart in which a first electronic device triggers a second electronic device to exchange a whiteboard drawing picture according to an embodiment of this application. FIG. 9B includes the following steps 908 to 910 in total.

Step 908: A user issues a whiteboard sharing instruction to the first electronic device.

For example, when the first electronic device runs conferencing software and joins an online conference, the user may click a "Whiteboard Sharing" option on an interface of the conferencing software to issue the whiteboard sharing instruction to the first electronic device. Further, the user may select, on the interface of the conferencing software, a whiteboard sharing process to use a whiteboard camera loaded by the first electronic device, that is, share a picture of a whiteboard on the second electronic device.

Step 909: The conferencing software in the first electronic device invokes a system interface to obtain parameters of the whiteboard camera.

After the whiteboard sharing instruction issued by the user is obtained, because the first electronic device loads the second electronic device as a virtual whiteboard camera, the conferencing software in the first electronic device may obtain the parameters of the whiteboard camera by invoking the system interface, for example, parameters such as a resolution, a frame rate, and an image encoding format of the whiteboard camera.

Step 910: The conferencing software in the first electronic device turns on the whiteboard camera, and sets parameters of the picture of the whiteboard requested to be shared, for example, parameters such as a resolution, a frame rate, and an image encoding format of the picture of the whiteboard.

After the user issues the whiteboard sharing instruction in the first electronic device to trigger the second electronic device to share the picture of the whiteboard in the conference joined by the first electronic device, the first electronic device and the second electronic device can exchange the picture of the whiteboard.

For example, FIG. 9C-1 and FIG. 9C-2 are a schematic flowchart in which a first electronic device exchanges a picture of a whiteboard with a second electronic device according to an embodiment of this application. FIG. 9C-1 and FIG. 9C-2 include the following steps 911 to 920 in total. It should be noted that, for ease of drawing, FIG. 9C-1 and FIG. 9C-2 do not describe specific step names.

Step 911: A driver management component of the second electronic device detects that a whiteboard camera is turned on.

Step 912: The driver management component of the second electronic device reports a device turn-on event to a collaboration component, where the event carries parameters of the picture of the whiteboard that the first electronic device requests to share, for example, parameters such as a resolution, a frame rate, and an image encoding format of the picture of the whiteboard.

Step 913: The collaboration component of the second electronic device sends a whiteboard sharing request to a whiteboard component, to request the whiteboard component to share the picture of the whiteboard.

After the whiteboard component receives the whiteboard sharing request, if whiteboard software is currently not started, the whiteboard component starts the whiteboard software; or if whiteboard software is currently started and running in background, the whiteboard component actively switches the whiteboard software to foreground for running.

Step 914: The collaboration component of the second electronic device invokes a media control interface, to create and start a procedure for capturing and sending the picture of the whiteboard, and pass parameter information such as a capture mode, a codec parameter, and a media stream output parameter.

Step 915: A media control component separately establishes a capture link, an encoding link, and a media stream output link for a whiteboard drawing picture, to output a media stream to a UVC physical channel directionally.

Step 916: The media control component binds the capture link, the encoding link, and the media stream output link.

Step 917: The whiteboard component starts capturing content of the picture of the whiteboard, and forwards the raw picture of the whiteboard to a codec component.

Step 918: The codec component performs encoding processing on the raw picture of the whiteboard to obtain an encoded media stream.

An encoding format of the picture of the whiteboard may be, for example, MJPEG.

Step 919: The codec component forwards the encoded media stream to the driver management component.

Step 920: The driver management component sends the encoded media stream to the whiteboard camera in the first electronic device through a UVC standard channel, and forwards the encoded media stream to conferencing software in a system callback mode.

Then the conferencing software in the first electronic device may further forward the encoded media stream to a conferencing server, thereby sharing the picture of the whiteboard in a conference joined by the first electronic device.

Mode 1.2: The first electronic device connects to the second electronic device by using a wired network or a wireless network, and loads the second electronic device as a virtual camera.

In the mode 1.2, the first electronic device and the second electronic device are connected by using a wired network (for example, a local area network) or a wireless network, and signaling or a data stream between the first electronic device and the second electronic device is exchanged in a network transmission mode.

In addition, to establish a connection between the first electronic device and the second electronic device, agent software may be installed on the first electronic device, and the agent software is responsible for establishing the connection between the first electronic device and the second electronic device.

For example, FIG. 10A is a diagram in which a first electronic device establishes a connection to a second electronic device according to an embodiment of this application. As shown in FIG. 10A, a process in which the first electronic device establishes a connection to the second electronic device by using agent software includes the following steps 1001 to 1004.

Step 1001: A user triggers, by using the agent software on the first electronic device, establishment of a connection to the second electronic device.

For example, the user may input a projection code (for example, input by performing code scanning) or an (Internet Protocol, IP) address of the second electronic device on an interface of the agent software. The projection code may be eight letters or six digits, and the IP address of the second electronic device may be obtained through parsing.

Step 1002: The agent software initiates a connection request to the second electronic device and establishes a connection channel.

For example, the agent software may initiate a transmission control protocol (Transmission Control Protocol, TCP) signaling connection request to the second electronic device and establish a signaling channel. In a process of establishing the signaling channel, the agent software negotiates with the second electronic device about port information for receiving and sending a media stream.

Step 1003: The second electronic device detects whether the second electronic device has a whiteboard sharing capability, and feeds back, to the agent software, that the second electronic device has the whiteboard sharing capability.

Step 1004: The agent software invokes, based on a feedback result of the second electronic device, an application programming interface (Application Programming Interface, API) of a system to load a virtual whiteboard camera, and sets parameters such as a resolution, a frame rate, and an encoding format of the whiteboard camera.

FIG. 10B-1 and FIG. 10B-2 are a schematic flowchart in which a first electronic device exchanges a picture of a whiteboard with a second electronic device based on agent software according to an embodiment of this application. As shown in FIG. 10B-1 and FIG. 10B-2, a process in which the first electronic device exchanges the picture of the whiteboard with the second electronic device based on the agent software includes the following steps 1005 to 1018. It should be noted that, for ease of drawing, FIG. 10B-1 and FIG. 10B-2 do not describe specific step names.

Step 1005: A collaboration module of the agent software in the first electronic device detects that a virtual whiteboard camera is turned on by conferencing software.

The virtual whiteboard camera and the agent software may be implemented in a memory mapping mode, which specifically depends on a framework technology of an operating system.

Step 1006: The collaboration module of the agent software sends a whiteboard sharing request to a collaboration component of the second electronic device, to request sharing of the picture of the whiteboard.

The whiteboard sharing request may carry parameters such as a resolution, a requested frame rate, and an encoding format to indicate parameters of the picture of the whiteboard that needs to be shared.

Step 1007: The collaboration component of the second electronic device sends a whiteboard startup request to a whiteboard component, to request to start whiteboard software.

Step 1008: The collaboration component of the second electronic device invokes a media control interface, to create and start a procedure for capturing and sending the picture of the whiteboard, and pass parameters such as a mode of capturing the picture of the whiteboard, a codec parameter, and a media stream output parameter.

Step 1009: A media control component of the second electronic device separately establishes a capture link, an encoding link, and a media stream sending link for the picture of the whiteboard.

Step 1010: The media control component of the second electronic device binds the capture link, the encoding link, and the media stream sending link for the picture of the whiteboard.

Step 1011: A media control module of the agent software in the first electronic device synchronously establishes a media stream receiving link, a decoding link, and a rendering link (directed to the virtual whiteboard camera).

Step 1012: The media control module of the agent software in the first electronic device binds the media stream receiving link, the decoding link, and the rendering link.

Step 1013: The whiteboard component of the second electronic device starts capturing content of the picture of the whiteboard, and forwards the raw picture of the whiteboard to a codec component.

Step 1014: The codec component of the second electronic device performs encoding processing on the raw picture of the whiteboard to obtain an encoded media stream, where an encoding format may be, for example, H.264 or H.265.

Step 1015: The codec component of the second electronic device forwards the encoded media stream to a media processing component.

Step 1016: The media processing component of the second electronic device packetizes the encoded media stream into a real-time transport protocol (Real-time Transport Protocol, RTP) packet, and then forwards the RTP packet to a media port number negotiated with the agent software in advance.

Step 1017: After receiving the RTP packet from a network, a media processing module of the agent software in the first electronic device depacketizes the RTP packet, outputs the encoded media stream, and forwards the encoded media stream to a codec module.

Step 1018: The codec module decodes the encoded media stream to obtain a raw media stream, and forwards the raw media stream to the virtual whiteboard camera through a northbound interface of a virtual driver in a memory sharing mode.

After the virtual whiteboard camera obtains the raw media stream, the conferencing software can obtain the raw media stream, that is, the picture of the whiteboard, from a standard system interface.

Mode 1.3: The first electronic device connects to the second electronic device by using a wireless screen transmitter, and loads the second electronic device as a virtual camera.

In the mode 1.3, the wireless screen transmitter needs to be inserted into the first electronic device, and the first electronic device is wirelessly connected to the second electronic device by using the wireless screen transmitter. The wireless screen transmitter serves as an agent node to provide a network transceiver capability for the first electronic device. For the first electronic device, the wireless screen transmitter is actually a USB device.

For example, FIG. 11A is a diagram in which a first electronic device establishes a connection to a second electronic device by using a wireless screen transmitter according to an embodiment of this application. As shown in FIG. 11A, a process in which a first electronic device establishes a connection to a second electronic device by using a wireless screen transmitter includes the following steps 1101 to 1108.

Step 1101: A user inserts the wireless screen transmitter into a Type-C physical interface of the first electronic device, and the first electronic device automatically supplies power to the wireless screen transmitter.

Step 1102: After being powered on, the wireless screen transmitter automatically joins a Wi-Fi hotspot of the second electronic device.

Step 1103: The wireless screen transmitter and the second electronic device establish a TCP signaling channel, and negotiate communication information such as a port number for media transmission.

Step 1104: The second electronic device detects whether the second electronic device has a whiteboard sharing capability, and feeds back, to the wireless screen transmitter, that the second electronic device has the whiteboard sharing capability.

Step 1105: The wireless screen transmitter configures a USB device descriptor based on a feedback result of the second electronic device, and starts or restarts a USB device service, to trigger the first electronic device to perform USB device enumeration.

Step 1106: An operating system of the first electronic device initiates a USB device enumeration procedure.

Step 1107: After receiving an enumeration request of the operating system, the wireless screen transmitter returns the USB device descriptor to indicate that whiteboard sharing is supported.

Step 1108: The operating system invokes a system API interface to load a virtual whiteboard camera, and sets parameters such as a resolution, a frame rate, and an encoding format of the whiteboard camera.

For example, FIG. 11B-1 and FIG. 11B-2 are a diagram in which a first electronic device exchanges a picture of a whiteboard with a second electronic device by using a wireless screen transmitter according to an embodiment of this application. As shown in FIG. 11B-1 and FIG. 11B-2, a procedure in which the first electronic device and the second electronic device exchange the picture of the whiteboard by using the wireless screen transmitter is basically similar to that described in FIG. 10B-1 and FIG. 10B-2. The following focuses on steps that are different from the procedure described in FIG. 10B-1 and FIG. 10B-2 and in which the first electronic device and the second electronic device exchange the picture of the whiteboard by using the wireless screen transmitter.

Specifically, a difference from step 1005 lies in that a collaboration module of the wireless screen transmitter detects, by listening to a UVC device notification event, that a virtual whiteboard camera is turned on by conferencing software. A Linux driver layer may provide notification and monitoring capabilities for a UVC device.

A difference from step 1018 lies in that after performing H.264 decoding on an encoded media stream to obtain a raw media stream, a codec module encodes the raw media stream again into an MJPEG format, then invokes a UVC device write interface of a Linux system, and forwards the media stream in the MJPEG format to a virtual driver on the first electronic device by using the standard UVC protocol.

It may be understood that, because the first electronic device loads the wireless screen transmitter as a virtual USB device, the first electronic device actually needs to communicate with the wireless screen transmitter based on the UVC protocol. In this way, after decoding the media stream in an H.264 format, the wireless screen transmitter may encode the raw media stream again into the MJPEG format, and then send the media stream to the virtual driver on the first electronic device.

The foregoing describes how the first electronic device loads the second electronic device as a virtual camera based on various connection modes. In the plurality of connection modes described above, the first electronic device actually loads the second electronic device as a virtual whiteboard camera. After the second electronic device is loaded as the virtual whiteboard camera, the first electronic device and the second electronic device need to perform interaction based on the UVC protocol. Therefore, the second electronic device can share the picture of the whiteboard in a conference only by using the first electronic device, and it is difficult to implement whiteboard collaboration.

Based on this, the following describes in detail that the first electronic device loads the second electronic device as a HID and interacts with the second electronic device by using the HID protocol, so that the second electronic device can participate in whiteboard collaboration together with another electronic device joining a conference, instead of merely sharing the picture of the whiteboard.

In addition, when the first electronic device loads the second electronic device as the HID, the second electronic device may send, by using the first electronic device and the conferencing server, the picture of the whiteboard or a whiteboard drawing instruction to another electronic device joining the conference, and the another electronic device joining the conference also sends, by using the conferencing server and the first electronic device, the picture of the whiteboard or a whiteboard drawing instruction to the second electronic device, to implement bidirectional whiteboard collaboration.

For ease of understanding, the following describes a plurality of modes in which the first electronic device loads the second electronic device as the HID and interacts with the second electronic device by using the HID protocol.

Mode 2.1: The first electronic device connects to the second electronic device by using a cable, and loads the second electronic device as a virtual HID.

The mode 2.1 is similar to the mode 1.1. The user may also connect the first electronic device to the second electronic device by using a cable, and the first electronic device initiates USB device enumeration for the second electronic device.

A difference from the mode 1.1 lies in that, in the mode 2.1, the second electronic device returns a HID interface descriptor to the first electronic device, so that the first electronic device can load the second electronic device as the virtual HID. When the first electronic device loads the second electronic device as the virtual HID, the first electronic device and the second electronic device may exchange data based on the HID protocol. In addition, a format of data exchanged between the first electronic device and the second electronic device may be defined through negotiation, and is no longer fixed to the MJPEG format as in the UVC protocol. In this way, the first electronic device and the second electronic device can implement whiteboard collaboration between different electronic devices by exchanging whiteboard data streams.

For example, FIG. 12A and FIG. 12B are a schematic flowchart in which a first electronic device triggers a second electronic device to exchange a picture of a whiteboard according to an embodiment of this application. FIG. 12A and FIG. 12B include the following steps 1201 to 1217 in total. It should be noted that, for ease of drawing, FIG. 12A and FIG. 12B do not describe specific step names.

Step 1201: Conferencing software of the first electronic device writes a whiteboard collaboration request message into a HID channel, to send the whiteboard collaboration request message to a virtual HID.

Step 1202: The virtual HID forwards the whiteboard collaboration request message to the second electronic device through the HID protocol channel.

Step 1203: A driver management component of the second electronic device opens the HID channel and reads the whiteboard collaboration request message from the HID channel.

Step 1204: The driver management component of the second electronic device reports the whiteboard collaboration request message to a collaboration component.

In addition, the driver management component may also indicate to the collaboration component that a whiteboard collaboration mode is a local collaborative transmission mode, that is, the second electronic device implements whiteboard collaboration with another electronic device by using the first electronic device.

Step 1205: The collaboration component of the second electronic device sends a whiteboard startup request to a whiteboard component, to request the whiteboard component to start whiteboard software.

Step 1206: The collaboration component of the second electronic device invokes a media control interface, to create and start a whiteboard collaboration procedure.

Step 1207: A media control component of the second electronic device separately establishes an internal receiving and sending link and an external receiving and sending link (HID protocol channel) for a whiteboard data stream.

Step 1208: The media control component of the second electronic device binds the internal receiving and sending link and an external receiving and sending link for the whiteboard data stream.

Step 1209: A user draws content on an interface of the whiteboard software in the second electronic device, for example, draws a circle.

Step 1210: The whiteboard component of the second electronic device generates vector data based on the content drawn by the user, saves the vector data to a local database, and serializes the vector data to obtain a whiteboard data stream.

The vector data is data that represents a position and a shape of a graphic by using x and y coordinates in a rectangular coordinate system, and can effectively indicate a position and a shape of the content drawn by the user on the whiteboard interface. In this way, when obtaining the vector data, another electronic device can restore, based on the vector data, the content drawn by the user, to draw the same content on a whiteboard interface of the another electronic device.

Step 1211: The whiteboard component of the second electronic device forwards the whiteboard data stream to the driver management module, and the driver management module sends a whiteboard drawing instruction to the virtual HID of the first electronic device by using the HID protocol.

Step 1212: The conferencing software of the first electronic device obtains the whiteboard data stream from the virtual HID.

Step 1213: The conferencing software of the first electronic device forwards the whiteboard data stream to a conferencing server, so that the conferencing server further forwards the whiteboard data stream to another electronic device joining a conference.

In this way, the another electronic device joining the conference can draw the picture of the whiteboard based on the received whiteboard data stream, and the picture of the whiteboard drawn by the another electronic device is the same as the picture of the whiteboard on the second electronic device.

Step 1214: The conferencing software of the first electronic device receives, from the conferencing server, a whiteboard data stream sent by the another electronic device.

The whiteboard data stream sent by the another electronic device may be full whiteboard data or incremental whiteboard data. The full whiteboard data is obtained based on the picture of the entire whiteboard. Therefore, the entire whiteboard drawing picture can be restored based on the full whiteboard data. The incremental whiteboard data is obtained by the electronic device based on content updated on the picture of the whiteboard between a current moment and a previous moment. Therefore, the second electronic device updates content on the existing picture of the whiteboard based on the incremental whiteboard data, so that the picture of the whiteboard can be synchronized.

Step 1215: The conferencing software of the first electronic device writes the whiteboard data stream into the virtual HID, and the virtual HID sends the whiteboard data stream to the second electronic device by using the HID protocol.

Step 1216: The driver management component of the second electronic device reads the whiteboard data stream from the virtual HID, and forwards the whiteboard data stream to the whiteboard component.

Step 1217: After receiving the whiteboard data stream, the whiteboard component of the second electronic device updates the picture of the whiteboard.

Specifically, the second electronic device may first parse the whiteboard data stream to obtain picture content carried in the whiteboard data stream. If the picture content is incremental data, new picture content is added to the existing picture of the whiteboard, so that the picture of the whiteboard is updated. If the picture content is full data, the picture of the whiteboard is redrawn.

Mode 2.2: The first electronic device connects to the second electronic device by using a wired network or a wireless network, and loads the second electronic device as a virtual HID.

In the mode 2.2, similar to the mode 1.2, the first electronic device may also be connected to the second electronic device by using a wired network or a wireless network. A difference from the mode 1.2 lies in that, after the first electronic device establishes a TCP connection to the second electronic device by using agent software, the first electronic device sends a whiteboard collaboration capability request message to the second electronic device, to request to confirm whether the second electronic device has a whiteboard collaboration capability. After the second electronic device returns a whiteboard collaboration capability response message to the first electronic device, the first electronic device may load the second electronic device as the virtual HID, and send the whiteboard collaboration request message to the second electronic device, to request the second electronic device to perform whiteboard collaboration with another electronic device in the conference joined by the first electronic device.

A process in which the first electronic device interacts with the second electronic device so that the second electronic device and the another electronic device joining the conference perform whiteboard collaboration together is similar to that in the foregoing mode 1.2, and a difference lies only in that the second electronic device can further receive a whiteboard data stream sent by the another electronic device by using the conferencing server and the first electronic device and then implement bidirectional whiteboard collaboration.

Mode 2.3: The first electronic device connects to the second electronic device by using a wireless screen transmitter, and loads the second electronic device as a virtual HID.

In the mode 2.3, similar to the mode 1.3, the first electronic device may also be connected to the second electronic device by using a wireless screen transmitter. A difference from the mode 1.2 lies in that, after the first electronic device establishes a TCP connection to the second electronic device by using the wireless screen transmitter, the second electronic device feeds back, to the wireless screen transmitter, that the second electronic device has a whiteboard collaboration capability, and the wireless screen transmitter triggers the first electronic device to perform USB device enumeration and load the second electronic device as a virtual HID. In this way, the first electronic device may send a whiteboard collaboration request message to the second electronic device, to request the second electronic device to perform whiteboard collaboration with another electronic device in the conference joined by the first electronic device.

A process in which the first electronic device interacts with the second electronic device so that the second electronic device and the another electronic device joining the conference perform whiteboard collaboration together is similar to that in the foregoing mode 1.3, and a difference lies only in that the second electronic device can further receive a whiteboard data stream sent by the another electronic device by using the conferencing server and the first electronic device and then implement bidirectional whiteboard collaboration.

The foregoing modes 1.1 to 1.3 and the foregoing modes 2.1 to 2.3 describe how the second electronic device interacts with another electronic device in the conference by using the first electronic device, to implement whiteboard sharing or whiteboard collaboration. With reference to specific examples, the following describes in detail a process in which the second electronic device interacts with another electronic device by using the conferencing server, to implement whiteboard sharing or whiteboard collaboration.

For example, referring to FIG. 3, an electronic device 100 in FIG. 3 may be, for example, a first electronic device, and an electronic device 200 may be, for example, a second electronic device, that is, the second electronic device may be connected to a conferencing server. In this way, the second electronic device may directly exchange a whiteboard data stream with the conferencing server, and the first electronic device is not needed for forwarding.

In a possible implementation, when forwarding the whiteboard data stream for the second electronic device, the conferencing server usually further needs to forward other conference content for the first electronic device. Therefore, to facilitate management of the conferencing server, a function responsible for forwarding the whiteboard data stream may be implemented as an independent function.

For example, FIG. 13A is a diagram of an architecture of another application scenario according to an embodiment of this application. As shown in FIG. 13A, a first electronic device establishes a connection to a second electronic device, the first electronic device further establishes a connection to a conference service module in a conferencing server, and the second electronic device further establishes a connection to a whiteboard service module in the conferencing server. The conferencing server may specifically include the conference service module and the whiteboard service module. The conference service module and the whiteboard service module may be located on different physical servers; or the conference service module and the whiteboard service module may be located on a same physical server, but are implemented by different software modules. For example, the conference service module and the whiteboard service module may be implemented by software modules located in different virtual machines.

A process of establishing the connection between the first electronic device and the second electronic device may be similar to that in the foregoing modes 2.1 to 2.3. For details, refer to the foregoing modes 2.1 to 2.3. Details are not described herein again. With reference to the accompanying drawings, the following describes in detail a specific process in which a first electronic device triggers a second electronic device to exchange a whiteboard data stream with a whiteboard service module.

For example, FIG. 13B-1 and FIG. 13B-2 are a schematic flowchart in which a first electronic device triggers a second electronic device to exchange a whiteboard data stream with a whiteboard service module according to an embodiment of this application. As shown in FIG. 13B-1 and FIG. 13B-2, a procedure in which the first electronic device triggers the second electronic device to exchange the whiteboard data stream with the whiteboard service module includes the following steps 1301 to 1317. It should be noted that, for ease of drawing, FIG. 13B-1 and FIG. 13B-2 do not describe specific step names.

Step 1301: The first electronic device sends a whiteboard collaboration request to a conference service module through a conference signaling channel.

The conference signaling channel is a signaling channel established between the first electronic device and the conference service module after the first electronic device joins a conference.

Step 1302: The conference service module sends a whiteboard collaboration request to the whiteboard service module, where the whiteboard collaboration request carries a conference number as a group forwarding identifier, so that the whiteboard service module can subsequently forward, based on the conference number, a whiteboard data stream to electronic devices participating in the conference.

Step 1303: The whiteboard service module allocates a whiteboard forwarding resource port, and returns communication address information such as an IP address and a port number, and authentication credentials such as an encryption algorithm and an encryption key to the conference service module.

Step 1304: The conference service module returns, to the first electronic device, a whiteboard collaboration authorization token, the communication address information such as the IP address and the port number and the authentication credentials such as the encryption algorithm and the encryption key that are returned by the whiteboard service module in step 1303.

Step 1305: The first electronic device initiates a whiteboard collaboration request to the second electronic device, where the whiteboard collaboration request carries the authentication credentials (for example, the encryption algorithm and the encryption key) and parameters (for example, the IP address, the port number, and a transmission protocol) of the whiteboard service module.

Step 1306: A collaboration component of the second electronic device requests a whiteboard component to start whiteboard software.

Step 1307: The collaboration component of the second electronic device invokes a media control interface, to create and start a whiteboard collaboration procedure.

Step 1308: A media control component of the second electronic device establishes a media stream control link, and the whiteboard component establishes a media stream sending control link with the whiteboard service module.

A communication protocol between the whiteboard component and the whiteboard service module may be TCP, and an authentication credential is carried when the whiteboard component establishes a connection to the whiteboard service module, so that the whiteboard service module authenticates the whiteboard component.

Step 1309: The media control component of the second electronic device separately establishes a whiteboard data stream receiving and sending link and a network receiving and sending link (a network transmission mode).

Step 1310: The whiteboard component of the second electronic device establishes a media stream transmission link with the whiteboard service module, where the media stream sending control link and the media stream transmission link may share one link, or may be independent link channels.

Step 1311: A user draws a graphic on a whiteboard software interface of the second electronic device.

Step 1312: The whiteboard component of the second electronic device generates vector data based on content drawn by the user, saves the vector data to a local database, and serializes the vector data to obtain a whiteboard data stream.

Step 1313: The whiteboard component of the second electronic device sends a whiteboard update request to the whiteboard service module by using the media stream sending control link, and the whiteboard service module returns authorization success to the whiteboard component.

Step 1314: The whiteboard component sends the whiteboard data stream to the whiteboard service module by using the media stream transmission link, and the whiteboard service module forwards the whiteboard data stream to another electronic device joining the conference.

Step 1315: After receiving a whiteboard data stream from the another electronic device in the conference, the whiteboard service module sends the whiteboard data stream to a media processing component of the second electronic device by using the media stream transmission link.

Step 1316: The media processing component of the second electronic device forwards the whiteboard data stream to the whiteboard component.

Step 1317: After receiving the whiteboard data stream, the whiteboard component of the second electronic device updates a picture of a whiteboard.

The foregoing mainly describes the solutions provided in embodiments of this application from the perspective of the methods. It may be understood that, to implement the foregoing functions, the electronic device includes a corresponding hardware structure and/or software module for performing each of the functions. A person skilled in the art should be easily aware that modules and algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that the module division in embodiments of this application is an example, and is merely logical function division. There may be another division manner in actual implementation.

The following describes in detail an apparatus and a device configured to perform the foregoing method in embodiments of this application.

FIG. 14 is a diagram of a structure of an apparatus 1400 for enabling whiteboard drawing according to an embodiment of this application. As shown in FIG. 14, the apparatus 1400 for enabling whiteboard drawing may be deployed on a first electronic device, and the apparatus 1400 for enabling whiteboard drawing includes:
a sending module 1401, configured to send a first request message to a second electronic device, where the first request message is used to request the second electronic device to share a whiteboard on the second electronic device in a first conference, and the first conference is a conference joined by the first electronic device; and
a receiving module 1402, configured to receive a first response message sent by the second electronic device, where the first response message indicates that the second electronic device successfully shares the whiteboard on the second electronic device in the first conference.

In a possible implementation,
the receiving module 1402 is further configured to receive first data sent by the second electronic device, where the first data is obtained based on a picture of the whiteboard; and
the sending module 1401 is further configured to send the first data to a conferencing server, where the conferencing server is connected to an electronic device joining the first conference.

In a possible implementation, the first data includes an image, and the image is obtained based on the picture of the whiteboard; or
the first data includes a first drawing instruction, and the first drawing instruction indicates a drawing process of the picture of the whiteboard.

In a possible implementation, the first data is used to display the picture of the whiteboard on a third electronic device joining the first conference;
the receiving module 1402 is further configured to receive second data sent by the conferencing server, where the second data includes a second drawing instruction, and the second drawing instruction indicates a drawing process performed by the third electronic device on the picture of the whiteboard; and
the sending module 1401 is further configured to send the second data to the second electronic device.

In a possible implementation, the apparatus further includes:
a display module 1403, configured to display, by the first electronic device, the picture of the whiteboard based on the first data.

In a possible implementation, the apparatus further includes:
a processing module 1404, configured to generate third data in response to a drawing operation performed by a user of the first electronic device on the picture of the whiteboard, where the third data includes a third drawing instruction, and the third drawing instruction indicates a drawing process corresponding to the drawing operation; and
the sending module 1401 is further configured to send the third data to the second electronic device and the conferencing server.

In a possible implementation, the first request message includes an address of a conferencing server, and the first request message is further used to request the second electronic device to exchange data indicating a picture of the whiteboard with the conferencing server, where the conferencing server is connected to an electronic device joining the first conference.

In a possible implementation,
the sending module 1401 is further configured to send a second request message to the conferencing server, where the second request message indicates the first electronic device to share, by using the second electronic device, the picture of the whiteboard with another electronic device joining the first conference; and
the receiving module 1402 is further configured to receive a second response message sent by the conferencing server, where the second response message includes an authentication credential, where
the first request message further includes the authentication credential, and the authentication credential is used to enable the second electronic device to be authenticated by the conferencing server.

In a possible implementation, the first electronic device is connected to the second electronic device by using a cable, a wireless network, or a wireless screen transmitter.

In a possible implementation, the first electronic device loads the second electronic device as a virtual camera, and the first electronic device communicates with the second electronic device by using the UVC protocol; and/or
the first electronic device loads the second electronic device as a virtual HID, and the first electronic device communicates with the second electronic device by using the HID protocol.

FIG. 15 is a diagram of a structure of an apparatus 1500 for enabling whiteboard drawing according to an embodiment of this application. As shown in FIG. 15, the apparatus 1500 for enabling whiteboard drawing may be deployed on a second electronic device, and the apparatus 1500 for enabling whiteboard drawing includes:
a receiving module 1501, configured to receive a first request message sent by a first electronic device, where the first request message is used to request the second electronic device to share a whiteboard on the second electronic device in a first conference, and the first conference is a conference joined by the first electronic device;
a display module 1502, configured to display a picture of the whiteboard, where the picture of the whiteboard is shared in the first conference; and
a sending module 1503, configured to send a first response message to the first electronic device, where the first response message indicates that the second electronic device successfully shares the whiteboard on the second electronic device in the first conference.

In a possible implementation,
the sending module 1503 is further configured to send first data to the first electronic device, where the first data is obtained based on the picture of the whiteboard, and the first data is used to share the picture of the whiteboard in the first conference.

In a possible implementation, the first data includes an image, and the image is obtained based on the picture of the whiteboard; or
the first data includes a first drawing instruction, and the first drawing instruction indicates a drawing process of the picture of the whiteboard.

In a possible implementation,
the receiving module 1501 is further configured to receive second data sent by the first electronic device, where the second data includes a second drawing instruction, and the second drawing instruction indicates a drawing process performed on the picture of the whiteboard; and
the apparatus further includes a processing module 1504, configured to execute the second drawing instruction to update the picture of the whiteboard.

In a possible implementation, the first request message includes an address of a conferencing server, and the first request message is further used to request the second electronic device to exchange data indicating the picture of the whiteboard with the conferencing server, where the conferencing server is connected to an electronic device joining the first conference; and
the sending module 1503 is further configured to send third data to the conferencing server, where the third data is obtained based on the picture of the whiteboard, and the third data is used to share the picture of the whiteboard in the first conference.

In a possible implementation,
the receiving module 1501 is further configured to receive fourth data sent by the conferencing server, where the fourth data includes a third drawing instruction, and the third drawing instruction indicates a drawing process performed by another electronic device joining the first conference on the picture of the whiteboard; and
the apparatus further includes a processing module 1504, configured to execute the third drawing instruction to update the picture of the whiteboard.

In a possible implementation, the first request message further includes an authentication credential, and the authentication credential is used to enable the second electronic device to be authenticated by the conferencing server; and
the apparatus further includes a processing module 1504, configured to establish a connection to the conferencing server by using the authentication credential.

In a possible implementation, the second electronic device is connected to the first electronic device by using a cable, a wireless network, or a wireless screen transmitter.

It should be noted that content such as information exchange and an execution process between modules and/or components of the apparatus is based on a same concept as the method embodiments corresponding to FIG. 6A to FIG. 13B-2 in this application. For specific content, refer to the descriptions in the foregoing method embodiments of this application. Details are not described herein again.

It should be noted that, for specific implementations of the apparatus and beneficial effects brought by the apparatus, refer to the descriptions in the method embodiments corresponding to FIG. 6A to FIG. 13B-2. Details are not described herein again.

An embodiment of this application further provides an electronic device, including a processor and a memory. The memory is configured to store computer instructions. When the processor executes the instructions, the electronic device is enabled to perform the method according to any one of the foregoing aspects. The electronic device may include the apparatus for enabling whiteboard drawing in the foregoing embodiment corresponding to FIG. 14 or FIG. 15.

An embodiment of this application further provides a whiteboard sharing system, including the apparatus for enabling whiteboard drawing in the embodiment corresponding to FIG. 14 and the apparatus for enabling whiteboard drawing in the embodiment corresponding to FIG. 15.

An embodiment of this application further provides a computer-readable storage medium, including instructions. When the instructions are run on a computer, the computer is enabled to control an electronic device to perform any implementation described in the foregoing method embodiments.

An embodiment of this application further provides a computer program product. The computer program product includes computer program code. When the computer program code is run on a computer, the computer is enabled to perform any implementation described in the foregoing method embodiments.

An embodiment of this application further provides a chip system, including a memory and a processor. The memory is configured to store a computer program, and the processor is configured to invoke the computer program from the memory and run the computer program, so that the chip performs any implementation described in the foregoing method embodiments.

In addition, it should be noted that the apparatus embodiments described above are merely examples. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or may certainly be implemented by dedicated hardware, including an application-specific integrated circuit, a dedicated CPU, a dedicated memory, a dedicated component, and the like. Generally, any function that can be performed by a computer program can be easily implemented by using corresponding hardware. Moreover, a specific hardware structure used to implement a same function may be in various forms, for example, in a form of an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, for example, a computer floppy disk, a USB flash drive, a removable hard disk, a ROM, a RAM, a magnetic disk, or an optical disc, and includes several instructions for instructing a computer device to perform the methods described in the embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to the embodiments of this application are all or partially executed The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

It should be understood that, "one embodiment" or "an embodiment" mentioned throughout this specification means that specific features, structures, or characteristics related to the embodiment are included in at least one embodiment of this application. Therefore, "in one embodiment" or "in an embodiment" that appears throughout this specification does not necessarily refer to the same embodiment. In addition, the specific features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, but should not be construed as any limitation on the implementation processes of embodiments of this application.

A person of ordinary skill in the art may be aware that the units and algorithm steps in the examples described with reference to the embodiments disclosed in this specification may be implemented by electronic hardware, computer software, or a combination thereof. To clearly describe the interchangeability between the hardware and the software, the foregoing has generally described compositions and steps of the examples according to functions. Whether the functions are performed by hardware or software depends on particular applications and design constraints of the technical solutions. A person skilled in the art may use different methods to implement the described functions for each particular application, but it should not be considered that the implementation goes beyond the scope of this application.

## Claims

1. A method for enabling whiteboard drawing, comprising:
sending, by a first electronic device, a first request message to a second electronic device, wherein the first request message is used to request the second electronic device to share a whiteboard on the second electronic device in a first conference, and the first conference is a conference joined by the first electronic device; and
receiving, by the first electronic device, a first response message sent by the second electronic device, wherein the first response message indicates that the second electronic device successfully shares the whiteboard on the second electronic device in the first conference.

2. The method according to claim 1, wherein the method further comprises:
receiving, by the first electronic device, first data sent by the second electronic device, wherein the first data is obtained based on a picture of the whiteboard; and
sending, by the first electronic device, the first data to a conferencing server, wherein the conferencing server is connected to an electronic device joining the first conference.

3. The method according to claim 2, wherein the first data comprises an image, and the image is obtained based on the picture of the whiteboard; or
the first data comprises a first drawing instruction, and the first drawing instruction indicates a drawing process of the picture of the whiteboard.

4. The method according to claim 2 or 3, wherein the first data is used to display the picture of the whiteboard on a third electronic device joining the first conference; and
the method further comprises:
receiving, by the first electronic device, second data sent by the conferencing server, wherein the second data comprises a second drawing instruction, and the second drawing instruction indicates a drawing process performed by the third electronic device on the picture of the whiteboard; and
sending, by the first electronic device, the second data to the second electronic device.

5. The method according to any one of claims 2 to 4, wherein the method further comprises:
displaying, by the first electronic device, the picture of the whiteboard based on the first data.

6. The method according to claim 5, wherein the method further comprises:
generating, by the first electronic device, third data in response to a drawing operation performed by a user of the first electronic device on the picture of the whiteboard, wherein the third data comprises a third drawing instruction, and the third drawing instruction indicates a drawing process corresponding to the drawing operation; and
sending, by the first electronic device, the third data to the second electronic device and the conferencing server.

7. The method according to claim 1, wherein the first request message comprises an address of a conferencing server, and the first request message is further used to request the second electronic device to exchange data indicating a picture of the whiteboard with the conferencing server, wherein the conferencing server is connected to an electronic device joining the first conference.

8. The method according to claim 7, wherein the method further comprises:
sending, by the first electronic device, a second request message to the conferencing server, wherein the second request message indicates the first electronic device to share, by using the second electronic device, the picture of the whiteboard with another electronic device joining the first conference; and
receiving, by the first electronic device, a second response message sent by the conferencing server, wherein the second response message comprises an authentication credential, wherein
the first request message further comprises the authentication credential, and the authentication credential is used to enable the second electronic device to be authenticated by the conferencing server.

9. The method according to any one of claims 1 to 8, wherein the first electronic device is connected to the second electronic device by using a cable, a wireless network, or a wireless screen transmitter.

10. The method according to claims 1 to 9, wherein the first electronic device loads the second electronic device as a virtual camera, and the first electronic device communicates with the second electronic device by using the universal serial bus video class UVC protocol; and/or
the first electronic device loads the second electronic device as a virtual human interface device HID, and the first electronic device communicates with the second electronic device by using the HID protocol.

11. A method for enabling whiteboard drawing, comprising:
receiving, by a second electronic device, a first request message sent by a first electronic device, wherein the first request message is used to request the second electronic device to share a whiteboard on the second electronic device in a first conference, and the first conference is a conference joined by the first electronic device;
displaying, by the second electronic device, a picture of the whiteboard, wherein the picture of the whiteboard is shared in the first conference; and
sending, by the second electronic device, a first response message to the first electronic device, wherein the first response message indicates that the second electronic device successfully shares the whiteboard on the second electronic device in the first conference.

12. The method according to claim 11, wherein the method further comprises:
sending, by the second electronic device, first data to the first electronic device, wherein the first data is obtained based on the picture of the whiteboard, and the first data is used to share the picture of the whiteboard in the first conference.

13. The method according to claim 12, wherein the first data comprises an image, and the image is obtained based on the picture of the whiteboard; or
the first data comprises a first drawing instruction, and the first drawing instruction indicates a drawing process of the picture of the whiteboard.

14. The method according to any one of claims 11 to 13, wherein the method further comprises:
receiving, by the second electronic device, second data sent by the first electronic device, wherein the second data comprises a second drawing instruction, and the second drawing instruction indicates a drawing process performed on the picture of the whiteboard; and
executing, by the second electronic device, the second drawing instruction to update the picture of the whiteboard.

15. The method according to claim 11, wherein the first request message comprises an address of a conferencing server, and the first request message is further used to request the second electronic device to exchange data indicating the picture of the whiteboard with the conferencing server, wherein the conferencing server is connected to an electronic device joining the first conference; and
the method further comprises:
sending, by the second electronic device, third data to the conferencing server, wherein the third data is obtained based on the picture of the whiteboard, and the third data is used to share the picture of the whiteboard in the first conference.

16. The method according to claim 15, wherein the method further comprises:
receiving, by the second electronic device, fourth data sent by the conferencing server, wherein the fourth data comprises a third drawing instruction, and the third drawing instruction indicates a drawing process performed by another electronic device joining the first conference on the picture of the whiteboard; and
executing, by the second electronic device, the third drawing instruction to update the picture of the whiteboard.

17. The method according to claim 15 or 16, wherein the first request message further comprises an authentication credential, and the authentication credential is used to enable the second electronic device to be authenticated by the conferencing server; and
the method further comprises:
establishing, by the second electronic device, a connection to the conferencing server by using the authentication credential.

18. The method according to any one of claims 11 to 17, wherein the second electronic device is connected to the first electronic device by using a cable, a wireless network, or a wireless screen transmitter.

19. An apparatus for enabling whiteboard drawing, wherein the apparatus is deployed on a first electronic device, and the apparatus comprises:
a sending module, configured to send a first request message to a second electronic device, wherein the first request message is used to request the second electronic device to share a whiteboard on the second electronic device in a first conference, and the first conference is a conference joined by the first electronic device; and
a receiving module, configured to receive a first response message sent by the second electronic device, wherein the first response message indicates that the second electronic device successfully shares the whiteboard on the second electronic device in the first conference.

20. The apparatus according to claim 19, wherein
the receiving module is further configured to receive first data sent by the second electronic device, wherein the first data is obtained based on a picture of the whiteboard; and
the sending module is further configured to send the first data to a conferencing server, wherein the conferencing server is connected to an electronic device joining the first conference.

21. The apparatus according to claim 20, wherein the first data comprises an image, and the image is obtained based on the picture of the whiteboard; or
the first data comprises a first drawing instruction, and the first drawing instruction indicates a drawing process of the picture of the whiteboard.

22. The apparatus according to claim 20 or 21, wherein the first data is used to display the picture of the whiteboard on a third electronic device joining the first conference;
the receiving module is further configured to receive second data sent by the conferencing server, wherein the second data comprises a second drawing instruction, and the second drawing instruction indicates a drawing process performed by the third electronic device on the picture of the whiteboard; and
the sending module is further configured to send the second data to the second electronic device.

23. The apparatus according to any one of claims 20 to 22, wherein the apparatus further comprises:
a display module, configured to display, by the first electronic device, the picture of the whiteboard based on the first data.

24. The apparatus according to claim 23, wherein the apparatus further comprises:
a processing module, configured to generate third data in response to a drawing operation performed by a user of the first electronic device on the picture of the whiteboard, wherein the third data comprises a third drawing instruction, and the third drawing instruction indicates a drawing process corresponding to the drawing operation; and
the sending module is further configured to send the third data to the second electronic device and the conferencing server.

25. The apparatus according to claim 19, wherein the first request message comprises an address of a conferencing server, and the first request message is further used to request the second electronic device to exchange data indicating a picture of the whiteboard with the conferencing server, wherein the conferencing server is connected to an electronic device joining the first conference.

26. The apparatus according to claim 25, wherein
the sending module is further configured to send a second request message to the conferencing server, wherein the second request message indicates the first electronic device to share, by using the second electronic device, the picture of the whiteboard with another electronic device joining the first conference; and
the receiving module is further configured to receive a second response message sent by the conferencing server, wherein the second response message comprises an authentication credential, wherein
the first request message further comprises the authentication credential, and the authentication credential is used to enable the second electronic device to be authenticated by the conferencing server.

27. An apparatus for enabling whiteboard drawing, wherein the apparatus is deployed on a second electronic device, and the apparatus comprises:
a receiving module, configured to receive a first request message sent by a first electronic device, wherein the first request message is used to request the second electronic device to share a whiteboard on the second electronic device in a first conference, and the first conference is a conference joined by the first electronic device;
a display module, configured to display a picture of the whiteboard, wherein the picture of the whiteboard is shared in the first conference; and
a sending module, configured to send a first response message to the first electronic device, wherein the first response message indicates that the second electronic device successfully shares the whiteboard on the second electronic device in the first conference.

28. The apparatus according to claim 27, wherein
the sending module is further configured to send first data to the first electronic device, wherein the first data is obtained based on the picture of the whiteboard, and the first data is used to share the picture of the whiteboard in the first conference.

29. The apparatus according to claim 28, wherein the first data comprises an image, and the image is obtained based on the picture of the whiteboard; or
the first data comprises a first drawing instruction, and the first drawing instruction indicates a drawing process of the picture of the whiteboard.

30. The apparatus according to any one of claims 27 to 29, wherein
the receiving module is further configured to receive second data sent by the first electronic device, wherein the second data comprises a second drawing instruction, and the second drawing instruction indicates a drawing process performed on the picture of the whiteboard; and
the apparatus further comprises a processing module, configured to execute the second drawing instruction to update the picture of the whiteboard.

31. The apparatus according to claim 27, wherein the first request message comprises an address of a conferencing server, and the first request message is further used to request the second electronic device to exchange data indicating the picture of the whiteboard with the conferencing server, wherein the conferencing server is connected to an electronic device joining the first conference; and
the sending module is further configured to send third data to the conferencing server, wherein the third data is obtained based on the picture of the whiteboard, and the third data is used to share the picture of the whiteboard in the first conference.

32. The apparatus according to claim 31, wherein
the receiving module is further configured to receive fourth data sent by the conferencing server, wherein the fourth data comprises a third drawing instruction, and the third drawing instruction indicates a drawing process performed by another electronic device joining the first conference on the picture of the whiteboard; and
the apparatus further comprises a processing module, configured to execute the third drawing instruction to update the picture of the whiteboard.

33. The apparatus according to claim 31 or 32, wherein the first request message further comprises an authentication credential, and the authentication credential is used to enable the second electronic device to be authenticated by the conferencing server; and
the apparatus further comprises a processing module, configured to establish a connection to the conferencing server by using the authentication credential.

34. An electronic device, comprising a memory and a processor, wherein the memory stores code, the processor is configured to execute the code, and when the code is executed, the electronic device performs the method according to any one of claims 1 to 18.

35. A whiteboard sharing system, comprising the apparatus according to any one of claims 19 to 26 and the apparatus according to any one of claims 27 to 33.

36. A computer storage medium, wherein the computer storage medium stores instructions, and when the instructions are executed by a computer, the computer is enabled to implement the method according to any one of claims 1 to 18.

37. A computer program product, wherein the computer program product stores instructions, and when the instructions are executed by a computer, the computer is enabled to implement the method according to any one of claims 1 to 18.
